# EUROPEAN PATENT SPECIFICATION

(11) **EP 3 474 594 B1**
(45) Date of publication and mention of the grant of the patent: **02.09.2020**
(21) Application number: 17840890.2
(22) Date of filing: 12.07.2017
(51) Int. Cl.: H04W 74/08, H04L 5/00, H04L 27/26, H04L 27/00

(54) **METHOD AND DEVICE FOR TRANSMITTING DATA ON UNLICENSED SPECTRUM**
VERFAHREN UND VORRICHTUNG ZUR ÜBERTRAGUNG VON DATEN AUF EINEM UNLIZENZIERTEN SPEKTRUM
PROCÉDÉ ET DISPOSITIF DE TRANSMISSION DE DONNÉES SUR UN SPECTRE SANS LICENCE

(30) Priority: 19.08.2016 CN 201610698159; 30.09.2016 CN 201610874487
(43) Date of publication of application: 24.04.2019
(73) Proprietor: Huawei Technologies Co., Ltd., Longgang District Shenzhen, Guangdong 518129 (CN)
(72) Inventor: PANG, Jiyong, Shenzhen Guangdong 518129 (CN); ZHANG, Jiayin, Shenzhen Guangdong 518129 (CN)
(74) Representative: Körber, Martin Hans
(86) International application number: PCT/CN2017/092632
(87) International publication number: WO 2018/032915

(56) References cited:
- WO-A1-2016/108584
- CN-A- 105 306 180
- CN-A- 105 338 568
- CN-A- 105 657 847
- HUAWEI ET AL: "Numerology and Frame Structure for NR-Unlicensed", 3GPP DRAFT; R1-167218, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Gothenburg, Sweden; 20160822 - 20160826 12 August 2016 (2016-08-12), XP051142229, Retrieved from the Internet: URL:http://www.3gpp.org/ftp/tsg_ran/WG1_RL 1/TSGR1_86/Docs/ [retrieved on 2016-08-12]
- HUAWEI ET AL: "Overview of frame structure for NR", 3GPP DRAFT; R1-166102, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Gothenburg, Sweden; 20160822 - 20160826 12 August 2016 (2016-08-12), XP051142115, Retrieved from the Internet: URL:http://www.3gpp.org/ftp/tsg_ran/WG1_RL 1/TSGR1_86/Docs/ [retrieved on 2016-08-12]
- NTT DOCOMO ET AL: "Views on NR frame structure", 3GPP DRAFT; R1-167395, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Gothenburg, Sweden; 20160822 - 20160826 13 August 2016 (2016-08-13), XP051142568, Retrieved from the Internet: URL:http://www.3gpp.org/ftp/tsg_ran/WG1_RL 1/TSGR1_86/Docs/ [retrieved on 2016-08-13]
- HUAWEI et al.: "UL LBT to Enable UE Multiplexing of Uplink Transmissions", 3GPPTSG RAN WG1 Meeting #84, Rl-160280, 15 February 2016 (2016-02-15), XP051053620,
- HUAWEI et al.: "Other issues related to LBT for eLAA", 3GPPTSG RAN WG1 84 Meeting, Rl-160741, 15 February 2016 (2016-02-15), XP051054068,

## Description

### TECHNICAL FIELD

The present invention relates to the field of communications technologies, and in particular, to a data transmission method on an unlicensed spectrum, and a device.

### BACKGROUND

As a service volume of wireless data dramatically increases, a licensed spectrum may not meet a spectrum requirement for communication. 3GPP introduces a licensed-assisted access (License Assisted Access, LAA for short) technology and an enhanced licensed-assisted access (enhanced LAA, eLAA for short) technology in release-13 (Release-13, R-13 for short) and R-14 respectively. To be specific, an LTE/LTE-A system is deployed on an unlicensed spectrum in a non-standalone (Non-standalone) manner and an unlicensed spectrum resource is used as much as possible with assistance of the licensed spectrum.

A communications system deployed on the unlicensed spectrum usually uses/shares a radio resource in a contention manner. A same or similar principle is used between stations (for example, a station (Station) in an Institute of Electrical and Electronics Engineers (Institute of Electrical and Electronics Engineers, IEEE for short) 802.11 protocol framework, including an access point (AP) and a non-AP station STA) to fairly contend for and use the unlicensed spectrum resource. Usually, before sending a signal, a station first listens to whether the unlicensed spectrum is idle, for example, determining a busy/idle state of the unlicensed spectrum based on a magnitude of a receive power on the unlicensed spectrum. If the receive power is less than a particular threshold, it is considered that the unlicensed spectrum is in an idle state, and the signal can be sent on the unlicensed spectrum. If the receive power is not less than a particular threshold, the signal is not sent. This process is referred to as listen before talk (Listen Before Talk, LBT for short). Introduction of the LBT avoids a conflict between the stations when the unlicensed spectrum resource is used, but also causes unpredictability to a start moment at which a station sends a signal. Therefore, a destination receiving station of the sent signal needs to constantly detect whether there is a signal on the unlicensed spectrum, to ensure that the destination receiving station can receive, at any possible moment, data that belongs to the destination receiving station. To be specific, the station cannot obtain reception synchronization at a specific moment based on a previously known timing interval (such as subframe timing of a Long Term Evolution (Long Term Evolution, LTE for short)/Long Term Evolution-Advanced (LTE-Advanced, LTE-A for short) system on the licensed spectrum).

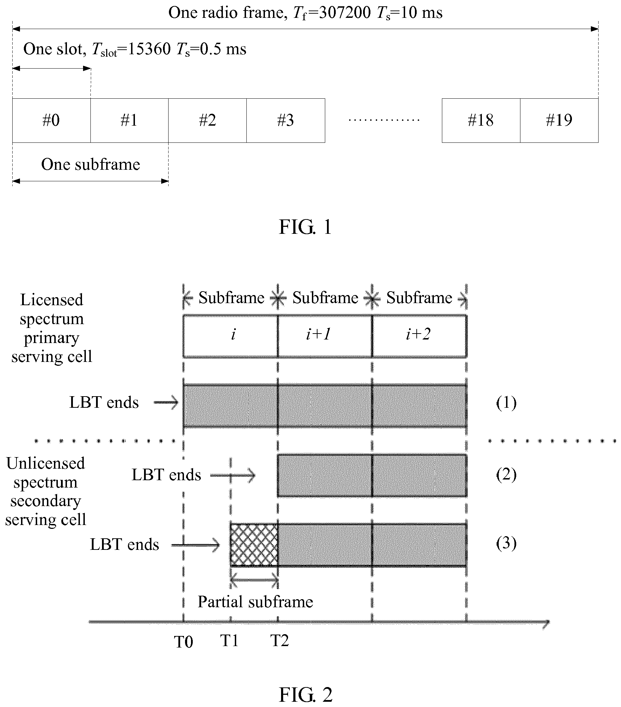

In the LTE/LTE-A system, radio resources are allocated and indicated by using a unit of a radio frame (Radio Frame, frame for short) and a subframe (Subframe) in a time dimension. A length of one radio frame is 10 ms, including 10 1-ms subframes, and each subframe includes a plurality of orthogonal frequency division multiplexing (Orthogonal Frequency Division Multiplexing, OFDM for short) symbols. In addition, each subframe is further divided into two 0.5-ms slots (Slot), and a frame structure is shown in FIG. 1. Only a limited data transmission start point is allowed in the LTE/LTE-A system. For example, transmission can start only at a start moment of a subframe or a slot. In a subframe type 3 applicable to an LAA secondary serving cell, one subframe includes 14 OFDM symbols, each slot includes seven OFDM symbols, and data transmission can start only from the first or the seventh OFDM symbol, to be specific, data transmission starts only at a slot boundary. Specifically, as shown in FIG. 2, if a base station (eNB) successfully completes the LBT before a moment T0, in other words, before a start moment of a subframe i, the base station may start data transmission at the moment T0 at the earliest. If an eNB successfully completes the LBT between a moment T0 and a moment T1, in other words, before a start moment of a second slot in a subframe i, the eNB may start data transmission at the moment T1 at the earliest. An initial half subframe is referred to as a partial subframe (partial subframe). If the eNB successfully completes the LBT between the moment T1 and a moment T2, in other words, before a start moment of a subframe i+1, the eNB may start data transmission at the moment T2 at the earliest.

It can be predicted that, in future 5G (5th Generation, 5th Generation) NR (New Radio, New Radio), use of the unlicensed spectrum is also an indispensable technical means to meet a service requirement and improve user experience. However, a frame structure defined in a 5G NR standard may be more complex, a subframe structure with a variable length (based on a subcarrier spacing or a quantity of included OFDM symbols) may be defined, and coexistence (different frequency bands within a same time period, or a same frequency band in different time periods) of subframes with different lengths may be allowed. Therefore, in a 5G NR system, a solution of the LTE/LTE-A system cannot be used at a start time after the LBT. In the 5G NR system, currently, there is still no solution for how to transmit data on the unlicensed spectrum.
The document HUAWEI ET AL: "Numerology and Frame Structure for NR-Unlicensed", 3GPP DRAFT; R1-167218, 3RD GENERATION PARTNERSHIP PROJECT (3GPP), MOBILE COMPENTENCE CENTRE shows possible solutions for a numerology and frame structure for new radio unlicensed frequency bands.

### SUMMARY

The invention is defined by the appended independent claims and further embodiments are described by the dependent claims. Any reference to inventions or embodiments not falling within the scope of the independent claims are to be interpreted as examples useful for understanding the invention. Embodiments of the present invention provide a data transmission method on an unlicensed spectrum, and a device, to provide a solution of implementing data transmission on an unlicensed spectrum in a 5G NR system.

According to a first aspect, a data sending method on an unlicensed spectrum is provided. The method includes:
performing, by a transmit end, an LBT operation on an unlicensed spectrum; and
if determining at a first moment that the unlicensed spectrum is idle and available, sending, by the transmit end, data to a receive end at a second moment by using the unlicensed spectrum, where the second moment is greater than or equal to the first moment and is less than or equal to a third moment, the third moment is a start moment of a reference subframe after the first moment, a length of the reference subframe is the same as a length of one of at least two types of pre-configured subframes, and adjacent reference subframes are consecutive in terms of time.

In this embodiment of the present invention, when a plurality of subframes with different lengths are configured, data sending on the unlicensed spectrum is implemented. The transmit end sends the data at the second moment by using the unlicensed spectrum, the second moment is greater than or equal to the first moment and is less than or equal to the third moment, and the third moment is the start moment of the reference subframe after the first moment, thereby shortening a waiting time from LBT to a start moment of data transmission, and improving channel utilization.

To take a length of each type of pre-configured subframe into consideration, in a possible implementation, a length of the reference subframe is the same as a length of a subframe with a maximum length in the at least two types of subframes.

To shorten the waiting time from the LBT to the start moment of the data transmission, in a possible implementation,
the third moment is a start moment of a first reference subframe after the first moment.

To reduce complexity of data detection at the receive end and reduce a quantity of times the receive end attempts to receive data,

Lengths of the at least two types of subframes each are 2^{K} times a length of a first subframe, K is an integer greater than or equal to 0, the second moment is a moment that is ΔT later than a start moment of a reference subframe in which the first moment falls, ΔT is an integer multiple of the length of the first subframe, and the first subframe is a subframe with a minimum length in the at least two types of subframes.

To further shorten the waiting time from the LBT to the start moment of the data transmission, in a possible implementation, ΔT is less than the length of the reference subframe.

In this embodiment of the present invention, to reduce the complexity of the data detection at the receive end, reduce the quantity of times the receive end attempts to receive data, and shorten a time interval from the LBT to the start moment of the data transmission, the transmit end sends the data to the receive end at the second moment by using the unlicensed spectrum and a fixedly-configured subframe. Specifically, the following five possible implementations are included:

In a first possible implementation, a configuration of a first subframe used to transmit the data in an MCOT in which the second moment falls is the same as a configuration of the first subframe, and the first subframe is the subframe with the minimum length in the at least two types of subframes.

In a second possible implementation, a configuration of a first subframe used to transmit the data in the MCOT is the same as a configuration of a subframe with a maximum length that can be accommodated between the second moment and a start moment of a next reference subframe.

In a third possible implementation, a configuration of a first subframe used to transmit the data in the MCOT is the same as a configuration of a subframe used by the transmit end on a licensed spectrum at the second moment.

In a fourth possible implementation, a configuration of a subframe combination used to transmit the data in a first reference subframe length in the MCOT is the same as a configuration of a subframe combination used by the transmit end on a licensed spectrum at the second moment.

In a fifth possible implementation, a configuration of a subframe combination used to transmit the data between the second moment and the third moment in the MCOT is the same as a configuration of a subframe combination used by the transmit end on a licensed spectrum at the second moment.

In this embodiment of the present invention, to reduce the complexity of the data detection at the receive end, in a possible implementation, before the sending, by the transmit end, data to a receive end at a second moment by using the unlicensed spectrum, the method further includes:
sending, by the transmit end, first indication information to the receive end, where the first indication information carries at least one piece of information of: configuration information of a first subframe used to transmit the data, configuration information of a subframe combination used to transmit the data in a first reference subframe length, configuration information of a first subframe used to transmit the data in a reference subframe length, and configuration information of a subframe combination used to transmit the data in a reference subframe length, so that the receive end can learn of configuration information of a subframe or a subframe combination used by the transmit end to send the data.

In this embodiment of the present invention, to reduce the complexity of the data detection at the receive end, in a possible implementation, the sending, by the transmit end, data to a receive end at a second moment by using the unlicensed spectrum is specifically:
sending, by the transmit end, the data to the receive end by using M consecutive second subframes and N1 other subframes in the at least two subframes other than the second subframes in an MCOT in which the second moment falls, where the second subframe is a subframe with a maximum length in the at least two subframes, and N1 is an integer greater than or equal to 0; and/or
sending, by the transmit end, the data to the receive end by using M consecutive second subframes and some of N2 second subframes in a maximum channel occupancy time MCOT in which the second moment falls, where N2 is an integer greater than or equal to 0.

In this embodiment of the present invention, scheduling signaling of different time-frequency domain locations (time-frequency domain grids) may be designed for different users or user groups in 5G NR. In addition, demodulating the scheduling signaling does not necessarily require to receive the scheduling signaling or the data from a subframe boundary, to be specific, required scheduling signaling or data can also be correctly demodulated even if a user or a user group may start to receive the scheduling signaling or the data at a particular moment in a subframe. In consideration of the above, based on this, in a possible implementation, the sending, by the transmit end, data to a receive end at a second moment by using the unlicensed spectrum further includes:
sending, by the transmit end to the receive end by using the unlicensed spectrum at a moment that is Δt later than the second moment, scheduling signaling corresponding to the data, where Δt is a specified time offset.

Correspondingly, the receive end only needs to add the specified time offset (Δt) to a transmission start moment, to synchronously receive the required scheduling signaling or data.

In this embodiment of the present invention, if data transmission at the transmit end is required to be aligned with an OFDM symbol boundary, in a possible implementation,
the second moment is a start moment of one of at least one orthogonal frequency division multiplexing OFDM symbol set between the first moment and the third moment.

To reduce the complexity of the data detection at the receive end and reduce the quantity of times the receive end attempts to receive data, in a possible implementation,
the second moment is a start moment of one of at least one OFDM symbol set between the first moment and the third moment.

According to a second aspect, a data receiving method on an unlicensed spectrum is provided. The method includes:
detecting, by a receive end by using a configuration of at least one of at least two types of pre-configured subframes at a transmission start moment in one or more reference subframes on an unlicensed spectrum, data sent by the transmit end; and
receiving, by the receive end based on a detection result, the data sent by the transmit end, where
a length of the reference subframe is the same as a length of one of the at least two types of pre-configured subframes, and adjacent reference subframes are consecutive in terms of time. Lengths of the at least two types of subframes each are 2^{K} times a length of a first subframe, K is an integer greater than or equal to 0, the second moment is a moment that is ΔT later than a start moment of a reference subframe in which the first moment falls, ΔT is an integer multiple of the length of the first subframe, and the first subframe is a subframe with a minimum length in the at least two types of subframes.

In this embodiment of the present invention, when a plurality of subframes with different lengths are configured, data receiving on the unlicensed spectrum is implemented. The transmit end sends the data at a second moment by using the unlicensed spectrum, the second moment is greater than or equal to a first moment and is less than or equal to a third moment, and the third moment is a start moment of a reference subframe after the first moment, thereby shortening a waiting time from LBT to a start moment of data transmission, and improving channel utilization.

In this embodiment of the present invention, when the receive end detects, at the transmission start moment in the plurality of reference subframes on the unlicensed spectrum, the data sent by the transmit end, the plurality of reference subframes may be a plurality of consecutive reference subframes, or may be a plurality of inconsecutive reference subframes.

In this embodiment of the present invention, for a possible implementation of the length of the reference subframe, refer to a related description in the first aspect. Details are not described herein again.

In this embodiment of the present invention, a possible implementation of an interval length between two adjacent transmission start moments that is detected by the receive end includes:
the interval length between two adjacent transmission start moments is a total length of a specified quantity of OFDM symbols; or
the interval length between two adjacent transmission start moments is the same as a length of a first subframe, and the first subframe is a subframe with a minimum length in the at least two types of subframes; or
the interval length between two adjacent transmission start moments is the same as a length of a second subframe, and the second subframe is a subframe with a maximum length in the at least two types of subframes.

In this embodiment of the present invention, to reduce complexity of data detection at the receive end, in a possible implementation, the method further includes:
receiving, by the receive end, first indication information sent by the transmit end, where the first indication information carries at least one piece of information of: configuration information of a first subframe used to transmit the data, configuration information of a subframe combination used to transmit the data in a first reference subframe length, configuration information of a first subframe used to transmit the data in a reference subframe length, and configuration information of a subframe combination used to transmit the data in a reference subframe length; and
determining, by the receive end based on the first indication information, a subframe or a subframe combination used when the transmit end sends the data.

In this embodiment of the present invention, a possible implementation of a configuration of a subframe or a subframe combination used to transmit the data includes:
a configuration of a first subframe used to transmit the data is the same as a configuration of a first subframe, and the first subframe is a subframe with a minimum length in the at least two types of subframes; or
a configuration of a first subframe used to transmit the data is the same as a configuration of a subframe that is used by the transmit end and that is determined at a same moment by the receive end on a licensed spectrum; or
a configuration of a subframe combination used to transmit the data in a first reference subframe length is the same as a configuration of a subframe combination that is used by the transmit end and that is determined at a same moment by the receive end on a licensed spectrum; or
a configuration of a subframe combination used to transmit the data is the same as a configuration of a subframe combination that is used by the transmit end and that is determined at a same moment by the receive end on a licensed spectrum.

In this embodiment of the present invention, to reduce the complexity of the data detection at the receive end, in a possible implementation, the detecting, by a receive end by using a configuration of at least one of at least two types of pre-configured subframes at a transmission start moment in one or more reference subframes on an unlicensed spectrum, data sent by the transmit end includes:
detecting, by the receive end by using a configuration of a first subframe at the transmission start moment in the reference subframe, the data sent by the transmit end, where the first subframe is a subframe with a minimum length in the at least two types of subframes; and/or
detecting, by the receive end by using a configuration of a second subframe at the transmission start moment in the reference subframe, the data sent by the transmit end, where the second subframe is a subframe with a maximum length in the at least two types of subframes; and/or
detecting, by the receive end by separately using a configuration of each of the at least two types of subframes at the transmission start moment in the reference subframe, the data sent by the transmit end.

In this embodiment of the present invention, in a possible implementation, the method further includes:
after detecting, at any possible transmission start moment, the data sent by the transmit end, receiving, by the receive end, scheduling signaling corresponding to the data after a moment Δt, and Δt is a specified time offset.

According to a third aspect, a computer-readable storage medium is provided, where the computer-readable storage medium stores executable program code, and the program code is used to implement the method described in the first aspect.

According to a fourth aspect, a computer-readable storage medium is provided, where the computer-readable storage medium stores executable program code, and the program code is used to implement the method described in the second aspect.

According to a fifth aspect, a transmit end device is provided, and the transmit end device includes a module configured to perform the method in the first aspect.

According to a sixth aspect, a receive end device is provided, and the receive end device includes a module configured to perform the method in the second aspect.

According to a seventh aspect, a transmit end device is provided, including a processor, a transceiver, and a memory, where the processor reads a program in the memory, and performs the method in the first aspect.

According to an eighth aspect, a receive end device is provided, including a processor, a transceiver, and a memory, where the processor reads a program in the memory, and performs the method in the second aspect.

The embodiments of the present invention provide a solution for implementing data sending and receiving on the unlicensed spectrum when the plurality of sub frames with different lengths are configured in the 5G NR system. The transmit end sends the data at the second moment by using the unlicensed spectrum, the second moment is greater than or equal to the first moment and is less than or equal to the third moment, and the third moment is the start moment of the reference subframe after the first moment, thereby shortening the waiting time from the LBT to the start moment of the data transmission, and improving channel utilization.

### BRIEF DESCRIPTION OF DRAWINGS

FIG. 1 is a schematic structural diagram of a radio frame in an LTE/LTE-A system;
FIG. 2 is a schematic diagram of a possible transmission start moment of LAA;
FIG. 3A is a schematic structural diagram of a subframe in a 5G NR system according to an embodiment of the present invention;
FIG. 3B is a schematic structural diagram of a subframe in another 5G NR system according to an embodiment of the present invention;
FIG. 4A is a schematic diagram of a relationship between a subframe in a 5G NR system and a TTI according to an embodiment of the present invention;
FIG. 4B is a schematic diagram of a relationship between a subframe in another 5G NR system and a TTI according to an embodiment of the present invention;
FIG. 5 is a schematic flowchart of a data sending method on an unlicensed spectrum according to an embodiment of the present invention;
FIG. 6 is a schematic flowchart of a data receiving method on an unlicensed spectrum according to an embodiment of the present invention;
FIG. 7 is a schematic diagram of a transmission start moment and a transmission subframe according to Embodiment 1 of the present invention;
FIG. 8 is a schematic diagram of a data receiving moment and a receiving subframe according to Embodiment 1 of the present invention;
FIG. 9 is a schematic diagram of a transmission start moment and a transmission subframe according to Embodiment 2 of the present invention;
FIG. 10 is a schematic diagram of a transmission start moment and a transmission symbol according to Embodiment 3 of the present invention;
FIG. 11 is a schematic diagram of a configuration of a transmission subframe according to Embodiment 4 of the present invention;
FIG. 12 is a schematic diagram of a transmit end device according to an embodiment of the present invention;
FIG. 13 is a schematic diagram of another transmit end device according to an embodiment of the present invention;
FIG. 14 is a schematic diagram of a receive end device according to an embodiment of the present invention;
FIG. 15 is a schematic diagram of another receive end device according to an embodiment of the present invention;
FIG. 16 is a schematic diagram of a configuration of a TTI according to an embodiment of the present invention; and
FIG. 17 is a schematic diagram of a configuration of another TTI according to an embodiment of the present invention.

### DESCRIPTION OF EMBODIMENTS

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are some but not all of the embodiments of the present invention. All other embodiments obtained by persons of ordinary skill in the art based on the embodiments of the present invention without creative efforts shall fall within the protection scope of the present invention.

In the embodiments of the present invention, an unlicensed spectrum (also referred to as an unlicensed-type spectrum or a permission-exempt spectrum) may be understood as a physical frequency band that is open to a quantity of individual users and that can be directly used without registration or with separate permission. The unlicensed spectrum may be used by any type of terminal device that complies with a use rule (for example, a maximum level value, a bandwidth limitation, and a work period) without obtaining a use license in advance. A widely-used industrial, scientific, and medical (Industrial Scientific Medical, ISM for short) frequency band is an unlicensed physical frequency band that does not need to be licensed and that can be used by anyone.

A licensed spectrum (also referred to as a licensed-type spectrum or a permission spectrum) is a physical frequency band that can be used by obtaining a dedicated use right, a license, or permission. Conventionally, radio spectrum resources used for cellular mobile communications are located within a licensed physical frequency band. A government communications supervision department allocates a use right of a dedicated physical frequency band to a mobile communications infrastructure network operator, so as to provide mobile communications and a broadband data access service.

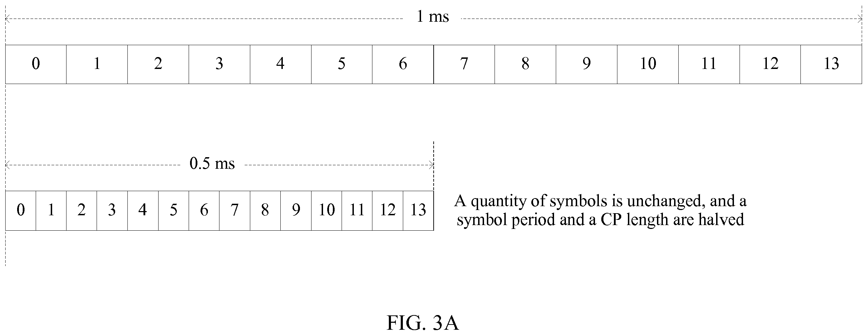

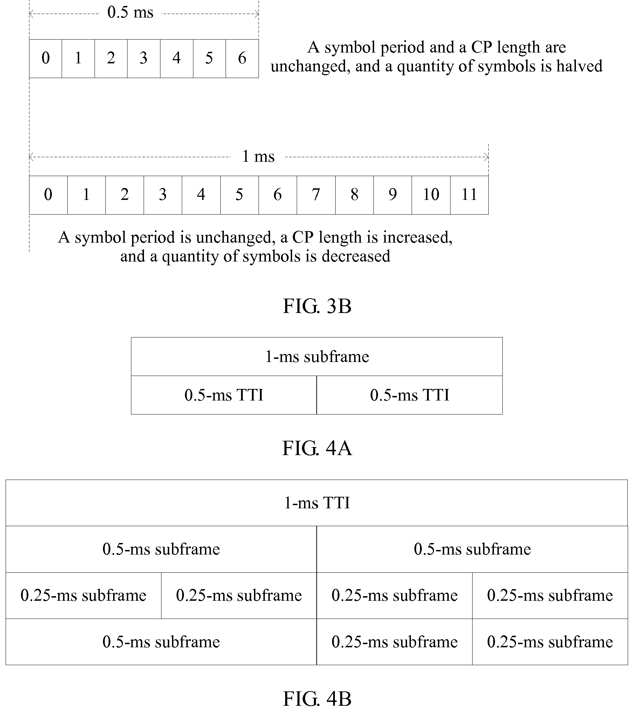

In a 5G NR system, concepts of a frame and a subframe may still exist, but definitions of the frame and the subframe may be different. For example, a length of the frame may be still consistent with LTE, and is fixed to 10 ms. However, when a length of the subframe is variable, a quantity of subframes included in one frame is no longer fixed. The length of the subframe may vary with a subcarrier spacing and/or an OFDM symbol length. It is assumed that the subframe includes a same quantity of OFDM symbols, and a cyclic prefix (Cyclic Prefix, CP) length changes in proportion to a symbol length. As shown in FIG. 3A, a 15-KHz subcarrier spacing corresponds to a subframe with a length of 1 ms, and a 30-KHz subcarrier spacing corresponds to a subframe with a length of 0.5 ms. The length of the subframe may alternatively vary with a quantity of included OFDM symbols. It is assumed that the subcarrier spacing, the OFDM symbol length, and the CP length are all unchanged. As shown in FIG. 3B, if 14 OFDM symbols form a subframe with a length of 1 ms, seven OFDM symbols form a subframe with a length of 0.5 ms. In addition, in a case of a same subcarrier spacing and a same OFDM symbol length, quantities of OFDM symbols included in subframes with a same length of 1 ms may be different due to different CP lengths. Certainly, the length of the subframe may alternatively vary with simultaneous changes of the quantity of OFDM symbols and the subcarrier spacing.

In addition, in an LTE system, a transmission time interval (Transmission Time Interval, TTI) is a time interval for a transport block (Transport Block) to reach a transport channel (Transport Channel, relative to a physical channel and a logical channel). Different services correspond to different TTIs on corresponding transport channels. For example, a TTI of a broadcast channel is 40 ms, and a TTI of a downlink shared channel may be 1 ms and is equal to a length of one subframe. The TTI mentioned in the embodiments of the present invention may be a minimum TTI supported on various transport channels. In a narrow sense, the minimum TTI may be understood as a minimum scheduling time unit in physical layer time domain. In the 5G NR system, there are two possible cases: (1) One subframe includes one or more TTIs, as shown in FIG. 4A; (2) one TTI includes one or more subframes, as shown in FIG. 4B. If an eNB can start transmitting data only at a start moment of the TTI, the eNB in a first case has a plurality of possible transmission start moments in one subframe, while the eNB in a second case has only one possible transmission start moment in a plurality of subframes.

A transmit end in the embodiments of the present invention may be a network-side node (such as a base station), or may be user equipment (such as a terminal). A receive end in the embodiments of the present invention may be a network-side node (such as a base station), or may be user equipment (such as a terminal).

A reference subframe in the embodiments of the present invention indicates a reference interval criterion of time measurement, for example, a minimum scheduling interval or a minimum downlink control signaling time interval, so as to describe a time relationship of, for example, various transport channels, reference signals, and periodic signaling. For transmission on a physical channel, a reference subframe is used as a criterion for descriptions of timing and a time sequence relationship. In addition, when the transmit end or the receive end simultaneously performs sending or receiving on two or more different physical channels (for example, two or more licensed spectrum channels are simultaneously used, or the licensed spectrum and the unlicensed spectrum are simultaneously used, or two or more unlicensed spectrum channels are simultaneously used), or when the transmit end or the receive end simultaneously performs sending or receiving on two or more different frequency domain sub-channels on one physical channel, to facilitate coordinated sending or receiving, transmission on different channels or sub-channels is required to keep time sequence alignment in a time dimension (for example, transmission on different channels or sub-channels is fully synchronized and a same frame structure is used, or subframe structures on different channels or sub-channels are different but a subframe boundary or a symbol boundary at each 1 ms location is aligned). In this case, for transmission on two or more channels or sub-channels, refer to a common reference subframe as a description criterion for timing and a time sequence relationship. A length of the reference subframe in the embodiments of the present invention is the same as a length of one of at least two types of pre-configured subframes, and adjacent reference sub frames are consecutive in terms of time.

In a possible implementation, the length of the reference subframe is the same as a length of a subframe with a maximum length in the at least two types of pre-configured sub frames.

The embodiments of the present invention are further described in detail in the following with reference to the accompanying drawings in this specification. It should be understood that the embodiments described herein are merely used to describe and explain the present invention but are not intended to limit the present invention.

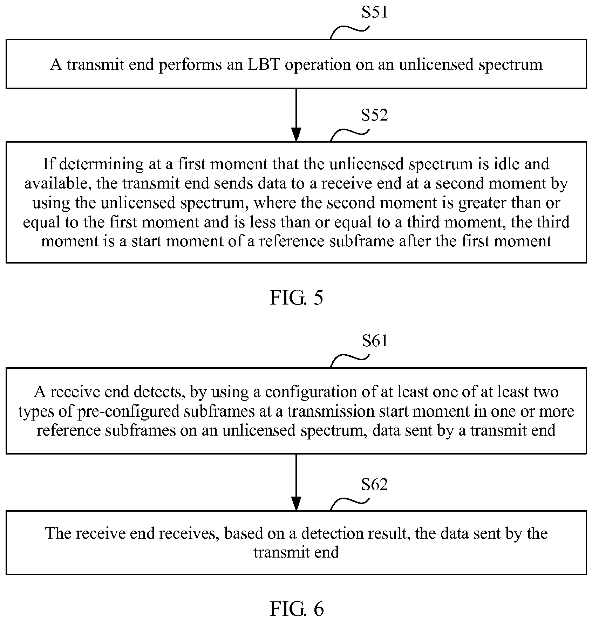

In an embodiment shown in FIG. 5, a data sending method on an unlicensed spectrum is provided and includes the following steps:
S51. A transmit end performs an LBT operation on an unlicensed spectrum.
S52. If determining at a first moment that the unlicensed spectrum is idle and available, the transmit end sends data to a receive end at a second moment by using the unlicensed spectrum, where the second moment is greater than or equal to the first moment and is less than or equal to a third moment, the third moment is a start moment of a reference subframe after the first moment.

In this embodiment of the present invention, the third moment may be a start moment of any reference subframe after the first moment. To avoid a case in which the unlicensed spectrum is occupied by another transmit end because no data is sent for a long time, the third moment is a start moment of a first reference subframe after the first moment.

In this embodiment of the present invention, the transmit end determines at the first moment that the unlicensed spectrum is idle and available and sends the data to the receive end at the second moment by using the unlicensed spectrum, so as to provide a solution of implementing data sending on the unlicensed spectrum in a 5G NR system when a plurality of subframes with different lengths are configured. The transmit end sends the data at the second moment by using the unlicensed spectrum, the second moment is greater than or equal to the first moment and is less than or equal to the third moment, and the third moment is the start moment of the reference subframe after the first moment, thereby shortening a waiting time from LBT to a start moment of data transmission, and improving channel utilization.

In an embodiment shown in FIG. 6, a data receiving method on an unlicensed spectrum is provided and includes the following steps:
S61. A receive end detects, by using a configuration of at least one of at least two types of pre-configured subframes at a transmission start moment in one or more reference subframes on an unlicensed spectrum, data sent by a transmit end.
S62. The receive end receives, based on a detection result, the data sent by the transmit end.

In this embodiment of the present invention, when the receive end detects, at the transmission start moment in the plurality of reference subframes on the unlicensed spectrum, the data sent by the transmit end, the plurality of reference subframes may be a plurality of consecutive reference subframes, or may be a plurality of inconsecutive reference subframes.

In this embodiment of the present invention, the receive end detects, by using the configuration of the at least one of the at least two types of pre-configured subframes at the transmission start moment in one or more reference subframes on the unlicensed spectrum, the data sent by the transmit end, so as to provide a solution of implementing data sending and receiving on the unlicensed spectrum in a 5G NR system when a plurality of subframes with different lengths are configured. The transmit end sends the data at a second moment by using the unlicensed spectrum, the second moment is greater than or equal to a first moment and is less than or equal to a third moment, and the third moment is a start moment of a reference subframe after the first moment, thereby shortening a waiting time from LBT to a start moment of data transmission, and improving channel utilization

The following describes in detail the data transmission method on an unlicensed spectrum provided in this embodiment of the present invention by using four specific embodiments. An example in which the transmit end is an eNB and the receive end is UE is used for description in the following embodiments. Another case is similar, and examples are not illustrated herein one by one.

Embodiment 1: In this embodiment, the data transmission at the transmit end needs to be aligned with a reference subframe boundary. Both the transmit end and the receive end need to know possible start moments of data sending and data receiving after LBT, so as to ensure channel synchronization between the transmit end and the receive end, and complete communication interaction. When the at least two types of subframes are configured, to be specific, a subframe has a plurality of possible configurations (such as a time length), after determining that the unlicensed spectrum is idle and available, the transmit end may select, based on scheduling of the transmit end, a subframe configuration used for the transmission; and the receive end performs detection based on a configuration of each of the at least two types of subframes at each possible transmission start moment on the unlicensed spectrum.

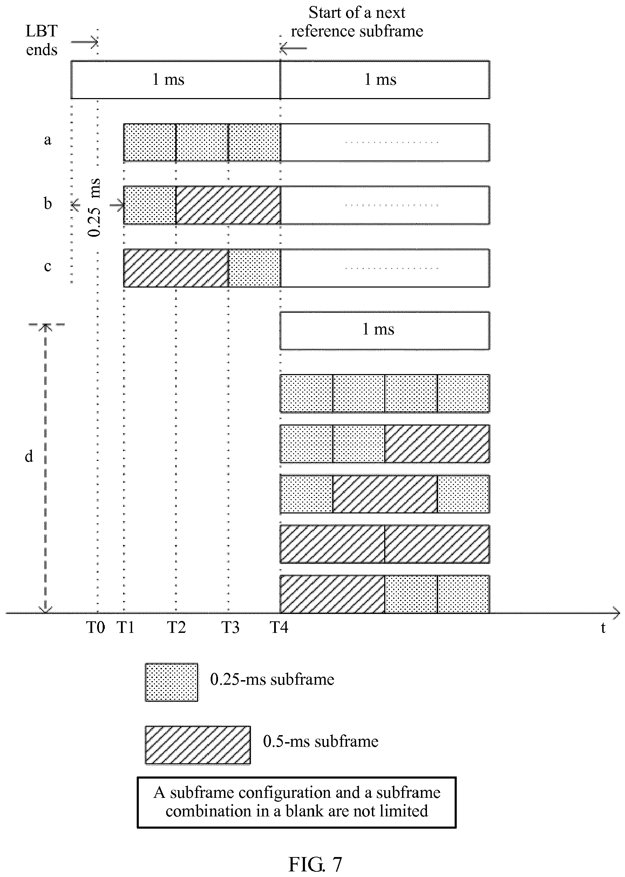

As shown in FIG. 7, it is assumed that a pre-configured subframe length has three values: 0.25 ms, 0.5 ms, and 1 ms. A maximum length of 1 ms in the configured subframes is used as a reference subframe on a timeline. It is assumed that transmission on the unlicensed spectrum needs to be aligned with the reference subframe boundary.

If an eNB determines at a moment T0 that the unlicensed spectrum is idle and available, the eNB may have four possible transmission start moments on the unlicensed spectrum: T1, T2, T3, and T4 respectively. Further, the following four possible transmission manners are included:
(1) If the eNB starts transmission at a moment T1, there are three subframe combinations used for transmission between the moment T1 and a moment T4. A first combination is that the eNB starts from the moment T1 to sequentially use three 0.25-ms subframes to perform data transmission, as shown in a of FIG. 7. A second combination is that the eNB starts from the moment T1 to sequentially use one 0.25-ms subframe and one 0.5-ms subframe to perform data transmission, as shown in b of FIG. 7. A third combination is that eNB starts from the moment T1 to sequentially use one 0.5-ms subframe and one 0.25-ms subframe to perform data transmission, as shown in c of FIG. 7. The eNB may select, based on scheduling of the eNB, a subframe configuration used for transmission between the moment T1 and the moment T4.
(2) If the eNB starts transmission at a moment T2, there are two sub frame combinations used for transmission between the moment T2 and the moment T4. A first combination is that the eNB starts from the moment T2 to sequentially use two 0.25-ms subframes to perform data transmission. A second combination is that the eNB starts from the moment T2 to use one 0.5-ms subframe to perform data transmission. The eNB may select, based on scheduling of the eNB, a subframe configuration used for transmission between the moment T2 and the moment T4.
(3) If the eNB starts transmission at a moment T3, there is only one subframe combination used for transmission between the moment T3 and the moment T4, to be specific, the eNB starts from the moment T3 to use one 0.25-ms subframe to perform data transmission.
(4) If the eNB starts transmission at a moment T4, there are six subframe combinations used for transmission in a reference subframe period. As shown in d of FIG. 7, a first combination is that the eNB starts from the moment T4 to use one 1-ms subframe to perform data transmission. A second combination is that the eNB starts from the moment T4 to sequentially use four 0.25-ms subframes to perform data transmission. A third combination is that the eNB starts from the moment T4 to sequentially use two 0.25-ms subframes and one 0.5-ms subframe to perform data transmission. A fourth combination is that the eNB starts from the moment T4 to sequentially use one 0.25-ms subframe, one 0.5-ms subframe, and one 0.25-ms subframe to perform data transmission. A fifth combination is that the eNB starts from the moment T4 to sequentially use two 0.5-ms subframes to perform data transmission. A sixth combination is that the eNB starts from the moment T4 to sequentially use one 0.5-ms subframe and two 0.25-ms subframes to perform data transmission. The eNB may select, based on scheduling of the eNB, a subframe configuration used for transmission in the reference subframe period.

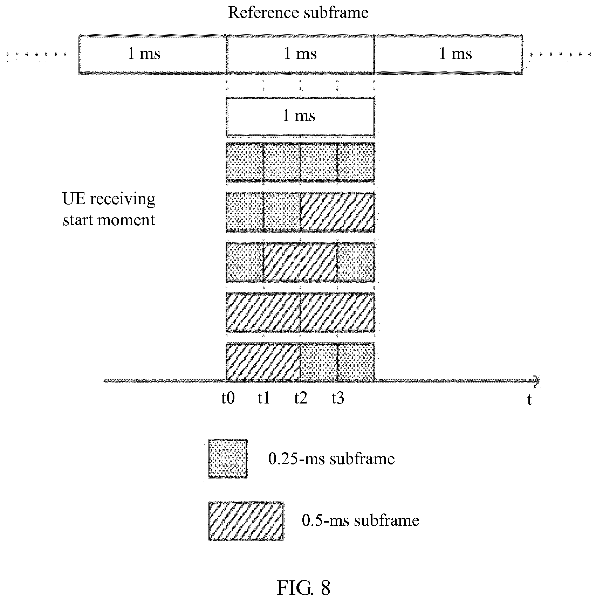

Correspondingly, because UE does not know a location of the moment T0, in each reference subframe period, the UE needs to separately attempt to receive/demodulate data from the eNB at four locations of t0 to t3. It is assumed that demodulation of a first subframe used for transmission is not related to a configuration of a subsequent subframe. As shown in FIG. 8, at a moment t0, in other words, at a reference subframe boundary, the UE needs to attempt to receive/demodulate the data based on three possible subframe length configurations (0.25 ms, 0.5 ms, and 1 ms). At a moment t1 and a moment t2, the UE needs to attempt to receive/demodulate the data based on two possible subframe length configurations (0.25 ms and 0.5 ms). At a moment t3, the UE needs to attempt to receive/demodulate the data based on only one possible subframe length configuration (0.25 ms). It is assumed that a subframe combination form in a reference subframe period in which a first transmission subframe is located needs to be jointly considered when the first transmission subframe is demodulated. Likewise, as shown in FIG. 8, at a moment t0, in other words, at the reference subframe boundary, the UE needs to attempt to receive/demodulate the data based on six possible subframe combinations. At the moment t1, the UE needs to attempt to receive/demodulate the data based on three possible subframe combinations. At a moment t2, the UE needs to attempt to receive/demodulate the data based on two possible subframe combinations. At a moment t3, the UE needs to attempt to receive/demodulate the data based on only one possible subframe combination.

In a possible implementation, lengths of the at least two types of subframes are 2^{K} times a length of a first subframe, K is an integer greater than or equal to 0, and the first subframe is a subframe with a minimum length in the at least two types of subframes.

In this manner, the receive end uses the subframe with the minimum length in the at least two types of subframes as an interval and determines each possible transmission start moment.

In this manner, to reduce complexity of data detection at the receive end and reduce a quantity of times the receive end attempts to receive data, in a possible implementation, the second moment is a moment that is ΔT later than a start time of a reference subframe in which the first moment falls, ΔT is an integer multiple of the length of the first subframe, and the first subframe is the subframe with the minimum length in the at least two types of subframes.

In a possible implementation, to shorten a time interval from LBT to a start moment of data transmission, ΔT is less than a length of the reference subframe.

In this embodiment, to reduce the complexity of the data detection at the receive end, reduce the quantity of times the receive end attempts to receive data, and shorten the time interval from the LBT to the start moment of the data transmission, the transmit end sends the data to the receive end at the second moment by using the unlicensed spectrum and a fixedly-configured subframe.

In a possible manner, a configuration of a first subframe used to transmit the data in an MCOT in which the second moment falls is the same as a configuration of the first subframe, and the first subframe is the subframe with the minimum length in the at least two types of subframes.

In a possible manner, a configuration of a first subframe used to transmit the data in an MCOT is the same as a configuration of a subframe with a maximum length that can be accommodated between the second moment and a start moment of a next reference subframe.

Embodiment 2: A difference between this embodiment and Embodiment 1 is that the data transmission at the transmit end is not required to be aligned with the reference subframe boundary in this embodiment.

In this embodiment, a transmission start moment may be a moment at a distance of at least one first time length from a start moment of a reference subframe in which the moment T0 is located, and the first time length is a length of the subframe with the minimum length in the at least two types of subframes.

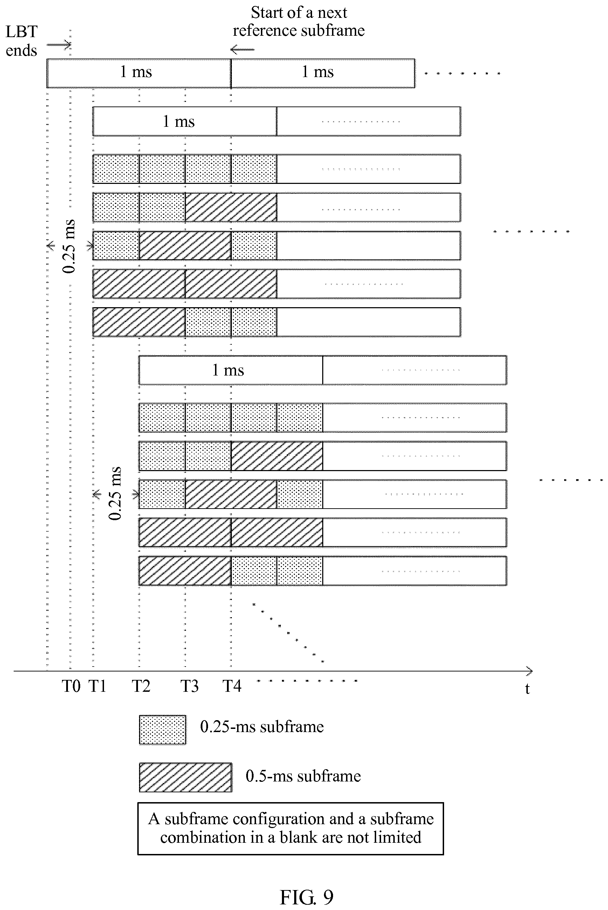

In an embodiment shown in FIG. 9, a possible transmission start moment of an eNB is T1, and there are six subframe combinations used for transmission within each interval with a same length as the reference subframe after transmission starts. As shown in FIG. 9, the eNB has three possible subframe configurations used for transmission at a transmission start moment, and the eNB may select, based on scheduling of the eNB, a used subframe configuration.

Embodiment 3: In this embodiment, the data transmission at the transmit end is required to be aligned with an orthogonal frequency division multiplexing (Orthogonal Frequency Division Multiplexing, OFDM for short) symbol boundary.

Correspondingly, the second moment is a start moment of any one OFDM symbol included between the first moment and the third moment.

To reduce complexity of data detection at the receive end and reduce a quantity of times the receive end attempts to receive data, the second moment is a start moment of one of at least one OFDM symbol set between the first moment and the third moment.

For example, if 5G NR is consistent with an LTE system, to be specific, a 15-KHz subcarrier is also used, and 14 symbols within 1 ms are maintained (but it does not indicate that internal designs of subframes are entirely the same), to coordinate coexistence of LTE and 5G NR systems, a symbol boundary of 5G NR transmission is required to be aligned with a symbol boundary when a conventional CP is used in LTE. In a conventional CP, a 1-ms LTE subframe includes two 0.5-ms slots, and each slot includes seven OFDM symbols. A CP length of the first OFDM symbol in each slot (to be specific, the zeroth and the seventh OFDM symbols in a subframe) is different from those of remaining six OFDM symbols, and the length is slightly longer.

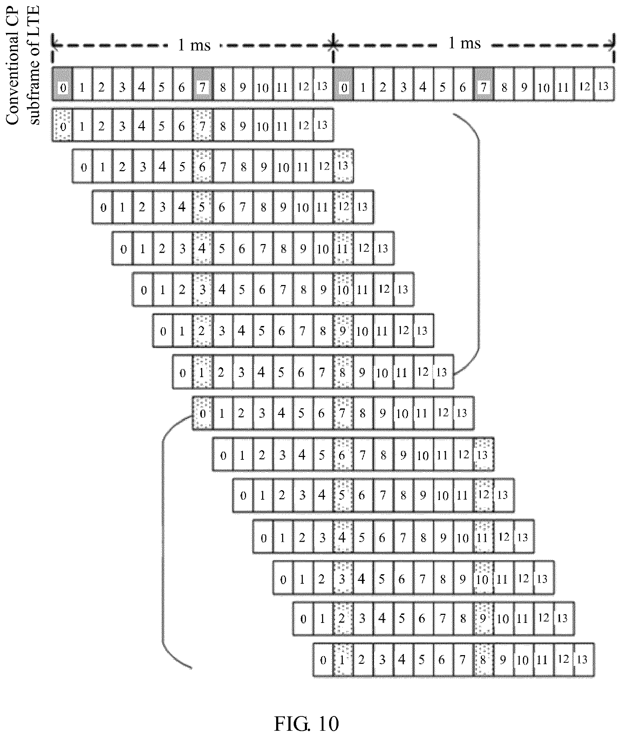

If an OFDM symbol boundary in the NR is required to be aligned with an OFDM symbol boundary in the LTE, a transmission start moment in the NR has 14 possible locations (corresponding to start moments of 14 OFDM symbols) in a reference subframe period. In particular, locations (to be specific, a sequence number in 14 OFDM symbols) of OFDM symbols of two long CPs in a 1-ms time interval in the NR may vary with the transmission start moment in the NR and an offset of a reference subframe. There are 7 cases in total, as shown in FIG. 10. This requires the NR to support sliding placement of an OFDM symbol location of a long CP in the reference subframe period.

To reduce detection complexity of UE, a limited possible start location may be agreed in advance. For example, the transmission start moment is start moments of the zeroth, the third, the seventh, and the 10^{th} OFDM symbols in the reference subframe.

Embodiment 4: In a maximum channel occupancy time MCOT in which the second moment falls, the transmit end preferentially uses a configuration with a fixed-length subframe to fill the MCOT.

In a possible implementation, the transmit end sends data to the receive end by using M consecutive second subframes and N1 other subframes in the at least two subframes other than the second subframes in the MCOT in which the second moment falls, where the second subframe is a subframe with a maximum length in the at least two subframes, and N1 is an integer greater than or equal to 0.

In another possible implementation, the transmit end sends the data to the receive end by using M consecutive second subframes and some of N2 second subframes in the maximum channel occupancy time MCOT in which the second moment falls, where N2 is an integer greater than or equal to 0.

In still another possible implementation, the transmit end sends the data to the receive end by using M consecutive second subframes, N1' other subframes in the at least two subframes other than the second subframes, and some of N2' second subframes in the MCOT in which the second moment falls, where the second subframe is the subframe with the maximum length in the at least two subframes, and N1' and N2' are integers greater than or equal to 0.

In this embodiment, if a length of the MCOT is an integer multiple of a length of the second subframe, N1, N2, Nl', and N2' are all 0.

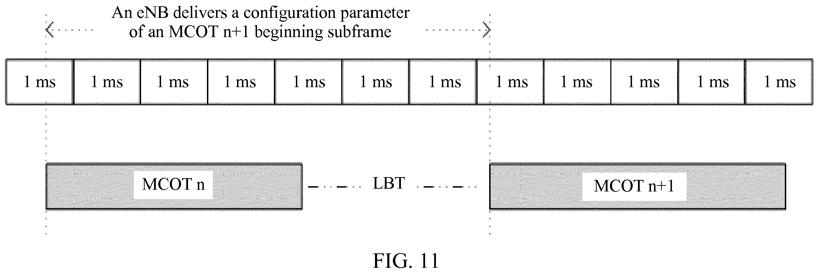

For example, as shown in FIG. 11, it is assumed that a pre-configured subframe length has three values: 0.25 ms, 0.5 ms, and 1 ms. A fixed length is a length of a 1-ms subframe configuration, and an eNB starts to perform transmission by using a subframe configuration with a length of 1 ms from an MCOT start moment. If MCOT duration is not an integer multiple of 1 ms, a partial subframe designed based on the 1-ms subframe may be used for filling, or a 0.5-ms subframe, a 0.25-ms subframe, or another subframe or subframe combination of different configurations may be used for filling.

Based on any one of the foregoing embodiments, to reduce complexity of data detection at the receive end, before the sending, by the transmit end, data to a receive end at a second moment by using the unlicensed spectrum, the method further includes:
sending, by the transmit end, first indication information to the receive end, where the first indication information carries at least one piece of information of: configuration information of a first subframe used to transmit the data, configuration information of a subframe combination used to transmit the data in a first reference subframe length, configuration information of a first subframe used to transmit the data in a reference subframe length, and configuration information of a subframe combination used to transmit the data in a reference subframe length.

Specifically, before transmitting the data, the transmit end notifies the receive end of information about a subframe configuration/combination in a next MCOT by using control signaling or a broadcast message. For example, the information includes a configuration of a first subframe in the MCOT. For another example, if there are P possible subframe configurations and/or Q possible subframe combinations at most, information of ┌log₂ *P*┐, ┌log₂ *Q*┐ or ┌log₂ (*P*+*Q*)┐ bits may be used to represent different subframe configurations or subframe combinations, where ┌ ┐ represents rounding up.

Optionally, the control signaling may be a combination of one or more of the following: L1 (layer 1 physical layer) signaling, L2 (layer 2 data link layer) signaling (mainly Media Access Control (Media Access Control, MAC for short) layer signaling), and L3 (layer 3) signaling (such as radio resource control (Radio Resource Control, RRC for short).

Optionally, the broadcast message may be delivered by using broadcast information included in a common broadcast channel, a dedicated broadcast channel, or a discovery reference signal (Discovery Reference Signal, DRS for short).

Optionally, the control signaling and/or the broadcast message may be delivered in one MCOT before the second moment on the unlicensed spectrum, or may be delivered in DRS transmission before the second moment, or may be delivered on a licensed spectrum before the second moment.

Based on any of the foregoing embodiments, to reduce signaling overheads, a default indication manner may be used to implicitly notify the receive end of a subframe configuration and/or a subframe combination used in the MCOT in which the second moment falls.

In a possible implementation, a configuration of a first subframe used to transmit the data in the MCOT is the same as a configuration of a subframe used by the transmit end on a licensed spectrum at the second moment.

In a possible implementation, a configuration of a subframe combination used to transmit the data in a first reference subframe length in the MCOT is the same as a configuration of a subframe combination used by the transmit end on a licensed spectrum at the second moment.

In a possible implementation, a configuration of a subframe combination used to transmit the data between the second moment and the third moment in the MCOT is the same as a configuration of a subframe combination used by the transmit end on the licensed spectrum at the second moment.

Based on any one of the foregoing embodiments, in a possible implementation, the sending, by the transmit end, data to a receive end at a second moment by using the unlicensed spectrum further includes:
sending, by the transmit end to the receive end by using the unlicensed spectrum at a moment that is Δt later than the second moment, scheduling signaling corresponding to the data, where Δt is a specified time offset.

Specifically, scheduling signaling of different time-frequency domain locations (time-frequency domain grids) may be designed for different users or user groups in 5G NR. In addition, demodulating the scheduling signaling does not necessarily require to receive the scheduling signaling or the data from a subframe boundary, to be specific, required scheduling signaling or data can also be correctly demodulated even if a user or a user group may start to receive the scheduling signaling or the data at a particular moment in a subframe. In consideration of the above, in this case, the receive end only needs to add the specified time offset (Δt) to a transmission start moment, and can synchronously receive the required scheduling signaling or data. Δt may be sent to the receive end by using the control signaling or the broadcast message.

In the foregoing embodiment, there is a case in which a minimum interval between transmission start moments is the same as a length of the subframe with the minimum length in the at least two types of subframes, and the transmission start moment is aligned with the subframe boundary. To be specific, it is assumed that one subframe includes one TTI. For a case in which one subframe includes a plurality of TTIs, the transmission start moment not only may occur at the subframe boundary (in this case, it may be considered that the subframe boundary overlaps a TTI boundary), but also may occur at the TTI boundary in the subframe.

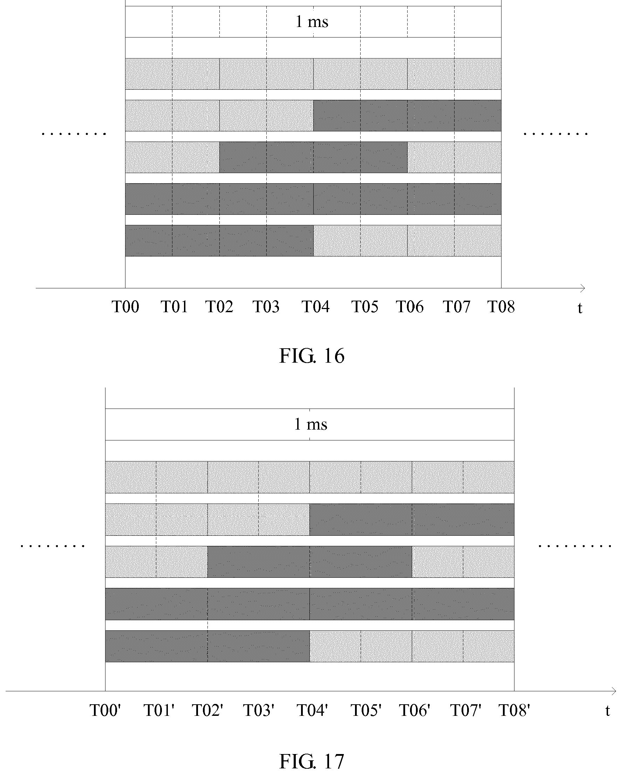

Embodiment 5: FIG. 16 is used as an example (in which a vertical solid line is subframe and TTI boundaries, a vertical dashed line is a TTI boundary that does not overlap a subframe boundary, and the vertical solid line and a vertical dashed line each represent a possible transmission start moment). A pre-configured subframe length has three values: 0.25 ms, 0.5 ms, and 1 ms. A TTI interval is 0.125 ms, to be specific, subframes with three lengths include two, four, and eight TTIs respectively. A maximum length value 1 ms in configured subframes is used as a reference subframe on a timeline. It is assumed that transmission on an unlicensed spectrum needs to be aligned with a reference subframe boundary (to be specific, the reference subframe boundary cannot be in the middle of a subframe and/or a TTI used for transmission, but should overlap a boundary of the subframe and/or TTI used for transmission). An example in which the transmit end is an eNB is still used, and the eNB has eight possible transmission start moments on the unlicensed spectrum: T00 to T07 respectively.
(1) If the eNB starts transmission at a moment T00, to be specific, the eNB starts transmission at the reference subframe boundary, there are six subframe combinations used for transmission in a reference subframe period (T00 to T08), and this is the same as that shown in d of FIG. 7.
(2) If the eNB starts transmission at a moment T01, T02, or T03, there are six subframe and/or TTI combinations used for transmission in a current reference subframe period (T01 to T08, T02 to T08, or T03 to T08).
(3) If the eNB starts transmission at a moment T04 or T05, there are four subframe and/or TTI combinations used for transmission in a current reference subframe period (T04 to T08, or T05 to T08).
(4) If the eNB starts transmission at a moment T06 or T07, there are three subframe and/or TTI combinations used for transmission in a current reference subframe period (T06 to T08, or T07 to T08).

Correspondingly, because UE does not know an accurate transmission start moment, in each reference subframe period, the UE needs to separately attempt to receive/demodulate data from the eNB at eight locations (possible transmission start moments) of T00 to T07 at most.

Embodiment 6: Different from Embodiment 5, in this embodiment, it is assumed that a quantity of TTIs included in a subframe is fixed to 2, in other words, a TTI length is equal to half of a subframe length. Corresponding to subframes with three lengths, TTI lengths of the subframes with three lengths are 0.125 ms, 0.25 ms, and 0.5 ms. FIG. 17 is used as an example (in which a vertical solid line is subframe and TTI boundaries, a vertical dashed line is a TTI boundary that does not overlap a subframe boundary, and both the vertical solid line and a vertical dashed line represent a possible transmission start moment). A maximum length value 1 ms in configured subframes is used as a reference subframe on a timeline. It is assumed that transmission on an unlicensed spectrum needs to keep aligned with a reference subframe boundary. An eNB has eight possible transmission start moments on the unlicensed spectrum: T00' to T07' respectively.
(1) If the eNB starts transmission at a moment T00', to be specific, the eNB starts transmission at the reference subframe boundary, there are six subframe combinations used for transmission in a reference subframe period (T00' to T08'), and this is the same as the case at the moment T00 in Embodiment 5.
(2) If the eNB starts transmission at a moment T01', there are three subframe and/or TTI combinations used for transmission in a current reference subframe period (T01' to T08').
(3) If the eNB starts transmission at a moment T02', there are five subframe and/or TTI combinations used for transmission in a current reference subframe period (T02' to T08').
(4) If the eNB starts transmission at a moment T03', there are two subframe and/or TTI combinations used for transmission in a current reference subframe period (T03' to T08').
(5) If the eNB starts transmission at a moment T04', there are four subframe and/or TTI combinations used for transmission in a current reference subframe period (T04' to T08').
(6) If the eNB starts transmission at a moment T05', there are one subframe and/or TTI combination used for transmission in a current reference subframe period (T05' to T08').
(7) If the eNB starts transmission at a moment T06', there are two subframe and/or TTI combinations used for transmission in a current reference subframe period (T06' to T08').
(8) If the eNB starts transmission at a moment T07', there are one subframe and/or TTI combination used for transmission in a current reference subframe period (T07' to T08').

Correspondingly, because UE does not know an accurate transmission start moment, in each reference subframe period, the UE needs to separately attempt to receive/demodulate data from the eNB at eight locations (possible transmission start moments) of T00' to T07' at most.

Embodiment 7: It is assumed that the transmission needs to be aligned with the reference subframe boundary in Embodiment 5 and Embodiment 6. For an assumption similar to Embodiment 2, if an eNB determines at a moment T0 that the unlicensed spectrum is idle and available, and the transmission is not required to be aligned with the reference subframe boundary, a transmission start moment may be a moment at a distance of at least one first' time length from a start moment of a reference subframe in which the moment T0 is located, and the first' time length is a length of a TTI in a subframe with a minimum length in the at least two types of subframes. If the eNB starts transmission at a moment T1, there are six subframe and/or TTI combinations used for transmission within each time interval with a same length as a reference subframe after transmission starts. Refer to a subframe and/or TTI combination within a reference subframe interval starting from the moment T00 in FIG. 16 or the moment T00' in FIG. 17.

The foregoing method processing procedure may be implemented by using a software program, and the software program may be stored in a storage medium. When the stored software program is invoked, the foregoing method steps are performed.

Based on a same inventive concept, the embodiments of the present invention further provide a transmit end device. A problem-solving principle of the device is similar to the foregoing method. Therefore, for implementation of the device, refer to a related description in the foregoing method embodiment. No repeated description is provided.

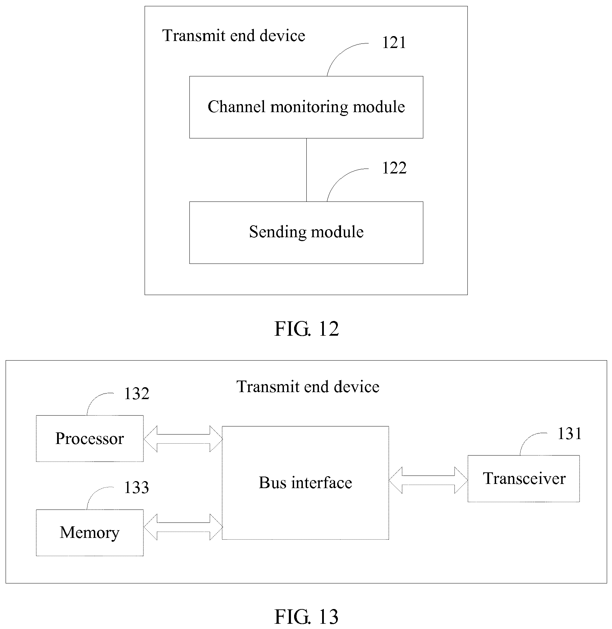

In an embodiment shown in FIG. 12, a transmit end device is provided, including:
a channel monitoring module 121, configured to perform an LBT operation on an unlicensed spectrum;
a sending module 122, configured to: if the channel monitoring module determines at a first moment that the unlicensed spectrum is idle and available, send data to a receive end at a second moment by using the unlicensed spectrum, where the second moment is greater than or equal to the first moment and is less than or equal to a third moment, the third moment is a start moment of a reference subframe after the first moment, a length of the reference subframe is the same as a length of one of at least two types of pre-configured subframes, and adjacent reference sub frames are consecutive in terms of time.

Optionally, the length of the reference subframe is the same as a length of a subframe with a maximum length in the at least two types of subframes.

Optionally, the third moment is a start moment of a first reference subframe after the first moment.

Optionally, lengths of the at least two types of subframes each are 2^{K} times a length of a first subframe, K is an integer greater than or equal to 0, the second moment is a moment that is ΔT later than a start moment of a reference subframe in which the first moment falls, ΔT is an integer multiple of the length of the first subframe, and the first subframe is a subframe with a minimum length in the at least two types of subframes.

Optionally, ΔT is less than the length of the reference subframe.

Optionally, a configuration of a first subframe used to transmit the data in an MCOT in which the second moment falls is the same as a configuration of the first subframe, and the first subframe is the subframe with the minimum length in the at least two types of subframes; or
a configuration of a first subframe used to transmit the data in the MCOT is the same as a configuration of a subframe with a maximum length that can be accommodated between the second moment and a start moment of a next reference subframe; or
a configuration of a first subframe used to transmit the data in the MCOT is the same as a configuration of a subframe used by the device on a licensed spectrum at the second moment; or
a configuration of a subframe combination used to transmit the data in a first reference subframe length in the MCOT is the same as a configuration of a subframe combination used by the device on a licensed spectrum at the second moment; or
a configuration of a subframe combination used to transmit the data between the second moment and the third moment in the MCOT is the same as a configuration of a subframe combination used by the device on a licensed spectrum at the second moment.

Optionally, before sending the data to the receive end at the second moment by using the unlicensed spectrum, the sending module is further configured to:
send first indication information to the receive end, where the first indication information carries at least one piece of information of: configuration information of a first subframe used to transmit the data, configuration information of a subframe combination used to transmit the data in a first reference subframe length, configuration information of a first subframe used to transmit the data in a reference subframe length, and configuration information of a subframe combination used to transmit the data in a reference subframe length.

Optionally, the sending module is specifically configured to:
send the data to the receive end by using M consecutive second subframes and N1 other subframes in the at least two subframes other than the second subframes in an MCOT in which the second moment falls, where the second subframe is a subframe with a maximum length in the at least two subframes, and N1 is an integer greater than or equal to 0; and/or
send the data to the receive end by using M consecutive second subframes and some of N2 second subframes in a maximum channel occupancy time MCOT in which the second moment falls, where N2 is an integer greater than or equal to 0.

Optionally, the second moment is a start moment of one of at least one orthogonal frequency division multiplexing OFDM symbol set between the first moment and the third moment.

Optionally, the sending module is further configured to: at a moment that is Δt later than the second moment, send, to the receive end by using the unlicensed spectrum, scheduling signaling corresponding to the data, and Δt is a specified time offset.

In an embodiment shown in FIG. 13, another transmit end device is provided, including a transceiver 131, a processor 132, and a memory 133.

The processor 132 reads a program in the memory 133, to perform the following process:
performing an LBT operation on an unlicensed spectrum; and if determining at a first moment that the unlicensed spectrum is idle and available, controlling the transceiver 131 at a second moment to send data to a receive end by using the unlicensed spectrum, where the second moment is greater than or equal to the first moment and is less than or equal to a third moment, the third moment is a start moment of a reference subframe after the first moment, a length of the reference subframe is the same as a length of one of at least two types of pre-configured subframes, and adjacent reference subframes are consecutive in terms of time.

The transceiver 131 is configured to receive and send data under control of the processor 132.

In FIG. 13, a bus architecture may include any quantity of interconnected buses and bridges, and specifically link together various circuits of one or more processors represented by the processor 132 and a memory represented by the memory 133. The bus architecture may further link together various other circuits such as a peripheral device, a voltage regulator, and a power management circuit. These are all well known in the art, and therefore are not further described in this specification. A bus interface provides an interface. The transceiver 131 may be one component or may be a plurality of components, for example, a plurality of receivers and transmitters, and provide a unit that is configured to communicate with various other apparatuses on a transmission medium. The processor 132 is responsible for managing the bus architecture and general processing, and may further provide various types of functions, including timing, a peripheral interface, voltage adjustment, power management, and other control functions. The memory 133 may store data used when the processor 132 performs an operation.

Optionally, the processor 132 may be a central processing unit (CPU), an application-specific integrated circuit (Application-Specific Integrated Circuit, ASIC for short), a field-programmable gate array (Field-Programmable Gate Array, FPGA for short), or a complex programmable logical device (Complex Programmable Logic Device, CPLD for short).

In this embodiment of the present invention, for specific processing performed by the processor 132, refer to related descriptions of the channel monitoring module 121 and the sending module 122 in the embodiment shown in FIG. 12. Details are not described herein again.

Based on a same inventive concept, the embodiments of the present invention further provide a receive end device. A problem-solving principle of the device is similar to the foregoing method. Therefore, for implementation of the device, refer to a related description in the method embodiment. No repeated description is provided.

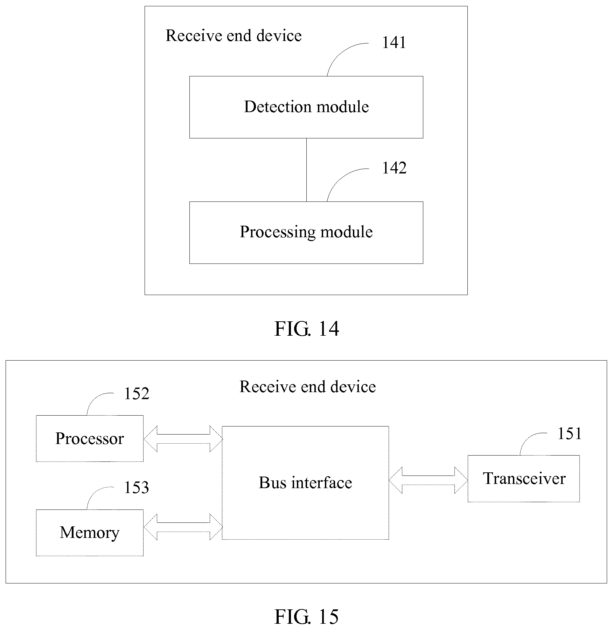

In an embodiment shown in FIG. 14, a receive end device is provided, including:
a detection module 141, configured to detect, by using a configuration of at least one of at least two types of pre-configured subframes at a transmission start moment in one or more reference subframes on an unlicensed spectrum, data sent by the transmit end; and
a processing module 142, configured to receive, based on a detection result of the detection module 141, the data sent by the transmit end, where
a length of the reference subframe is the same as a length of one of the at least two types of pre-configured subframes, and adjacent reference subframes are consecutive in terms of time.

Optionally, a length of the reference subframe is the same as a length of a subframe with a maximum length in the at least two types of subframes.

Optionally, an interval length between two adjacent transmission start moments is a total length of a specified quantity of OFDM symbols; or
an interval length between two adjacent transmission start moments is the same as a length of a first subframe, and the first subframe is a subframe with a minimum length in the at least two subframes; or
an interval length between two adjacent transmission start moments is the same as a length of a second subframe, and the second subframe is a subframe with a maximum length in the at least two types of subframes.

Optionally, the processing module is further configured to:
receive first indication information sent by the transmit end, where the first indication information carries at least one piece of information of: configuration information of a first subframe used to transmit the data, configuration information of a subframe combination used to transmit the data in a first reference subframe length, configuration information of a first subframe used to transmit the data in a reference subframe length, and configuration information of a subframe combination used to transmit the data in a reference subframe length; and
determine, based on the first indication information, a subframe or a subframe combination used when the transmit end sends the data.

Optionally, a configuration of a first subframe used to transmit the data is the same as a configuration of a first subframe, and the first subframe is a subframe with a minimum length in the at least two types of subframes; or
a configuration of a first subframe used to transmit the data is the same as a configuration of a subframe that is used by the transmit end and that is determined at a same moment by the device on a licensed spectrum; or
a configuration of a subframe combination used to transmit the data in a first reference subframe length is the same as a configuration of a subframe combination that is used by the transmit end and that is determined at a same moment by the device on a licensed spectrum; or
a configuration of a subframe combination used to transmit the data is the same as a configuration of a subframe combination that is used by the transmit end and that is determined at a same moment by the device on a licensed spectrum.

Optionally, the detection module is specifically configured to:
detect, by using a configuration of a first subframe at each transmission start moment in the reference subframe, the data sent by the transmit end, where the first subframe is a subframe with a minimum length in the at least two types of subframes; and/or
detect, by using a configuration of a second subframe at each transmission start moment in the reference subframe, the data sent by the transmit end, where the second subframe is a subframe with a maximum length in the at least two types of subframes; and/or
detect, by separately using a configuration of each of the at least two types of subframes at each transmission start moment in the reference subframe, the data sent by the transmit end.

Optionally, the processing module is further configured to:
after detecting, at any possible transmission start moment, the data sent by the transmit end, receive scheduling signaling corresponding to the data after a moment Δt, and Δt is a specified time offset.

In an embodiment shown in FIG. 15, another receive end device is provided, including: a transceiver 151, a processor 152, and a memory 153.

The processor 152 reads a program in the memory 153, to perform the following process:
detecting, by using a configuration of at least one of at least two types of pre-configured subframes at a transmission start moment in one or more reference subframes on an unlicensed spectrum, data sent by the transmit end; and
receiving, by using the transceiver 151 based on a detection result, the data sent by the transmit end.

The transceiver 151 is configured to receive and send data under control of the processor 152.

A length of the reference subframe is the same as a length of one of the at least two types of pre-configured subframes, and adjacent reference subframes are consecutive in terms of time.

In FIG. 15, a bus architecture may include any quantity of interconnected buses and bridges, and specifically link together various circuits of one or more processors represented by the processor 152 and a memory represented by the memory 153. The bus architecture may further link together various other circuits such as a peripheral device, a voltage regulator, and a power management circuit. These are all well known in the art, and therefore are not further described in this specification. A bus interface provides an interface. The transceiver 151 may be one component or may be a plurality of components, for example, a plurality of receivers and transmitters, and provide a unit that is configured to communicate with various other apparatuses on a transmission medium. The processor 152 is responsible for managing the bus architecture and general processing, and may further provide various types of functions, including timing, a peripheral interface, voltage adjustment, power management, and other control functions. The memory 153 may store data used when the processor 152 performs an operation.

Optionally, the processor 152 may be a CPU, an ASIC, an FPGA, or a CPLD.

In this embodiment of the present invention, for specific processing performed by the processor 152, refer to related descriptions of the detection module 141 and the processing module 142 in the embodiment shown in FIG. 14. Details are not described herein again.

Persons skilled in the art should understand that the embodiments of the present invention may be provided as a method, a system, or a computer program product. Therefore, the present invention may use a form of hardware only embodiments, software only embodiments, or embodiments with a combination of software and hardware. Moreover, the present invention may use a form of a computer program product that is implemented on one or more computer-usable storage media (including but not limited to a magnetic disk memory, a CD-ROM, an optical memory, and the like) that include computer-usable program code.

The present invention is described with reference to the flowcharts and/or block diagrams of the method, the device (system), and the computer program product according to the embodiments of the present invention. It should be understood that computer program instructions may be used to implement each process and/or each block in the flowcharts and/or the block diagrams, and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer-readable memory that can instruct the computer or any other programmable data processing device to work in a specific manner, so that the instructions stored in the computer-readable memory generate an artifact that includes an instruction apparatus. The instruction apparatus implements a specified function in one or more processes in the flowcharts and/or in one or more blocks in the block diagrams.

These computer program instructions may also be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

Although some example embodiments of the present invention have been described, persons skilled in the art can make changes and modifications to these embodiments once they learn of the basic inventive concept. Therefore, the appended claims are intended to be construed as to cover the example embodiments and all changes and modifications falling within the scope of the present invention.

## Claims

1. A data sending method on an unlicensed spectrum, wherein the method comprises:
Performing (S51), by a transmit end, a listen before talk, LBT, operation on an unlicensed spectrum; and
if determining (S52) at a first moment that the unlicensed spectrum is idle and available, sending, by the transmit end, data to a receive end at a second moment by using the unlicensed spectrum, wherein the second moment is greater than or equal to the first moment and is less than or equal to a third moment, the third moment is a start moment of a reference subframe after the first moment, a length of the reference subframe is the same as a length of one of at least two types of pre-configured subframes, and adjacent reference sub frames are consecutive in terms of time,
wherein lengths of the at least two types of subframes each are 2^{K} times a length of a first subframe, K is an integer greater than or equal to 0, the second moment is a moment that is ΔT later than a start moment of a reference subframe in which the first moment falls, ΔT is an integer multiple of the length of the first subframe, and the first subframe is a subframe with a minimum length in the at least two types of subframes.

2. The method according to claim 1 or 2, wherein
a configuration of a first subframe used to transmit the data in a maximum channel occupancy time, MCOT, in which the second moment falls is the same as a configuration of the first subframe, and the first subframe is the subframe with the minimum length in the at least two types of subframes; or
a configuration of a first subframe used to transmit the data in an MCOT is the same as a configuration of a subframe with a maximum length that can be accommodated between the second moment and a start moment of a next reference subframe; or
a configuration of a first subframe used to transmit the data in an MCOT is the same as a configuration of a subframe used by the transmit end on a licensed spectrum at the second moment; or
a configuration of a subframe combination used to transmit the data in a first reference subframe length in an MCOT is the same as a configuration of a subframe combination used by the transmit end on a licensed spectrum at the second moment; or
a configuration of a subframe combination used to transmit the data between the second moment and the third moment in an MCOT is the same as a configuration of a subframe combination used by the transmit end on a licensed spectrum at the second moment.

3. The method according to claim 1, wherein before the sending, by the transmit end, data to a receive end at a second moment by using the unlicensed spectrum, the method further comprises:
sending, by the transmit end, first indication information to the receive end, wherein the first indication information carries at least one piece of information of: configuration information of a first subframe used to transmit the data, configuration information of a subframe combination used to transmit the data in a first reference subframe length, configuration information of a first subframe used to transmit the data in a reference subframe length, and configuration information of a subframe combination used to transmit the data in a reference subframe length.

4. The method according to claim 1, wherein the sending, by the transmit end, data to a receive end at a second moment by using the unlicensed spectrum comprises:
sending, by the transmit end, the data to the receive end by using M consecutive second subframes and N1 other subframes in the at least two types of subframes other than the second subframes in an MCOT in which the second moment falls, wherein the second subframe is a subframe with a maximum length in the at least two types of subframes, and N1 is an integer greater than or equal to 0; and/or
sending, by the transmit end, the data to the receive end by using M consecutive second subframes and some of N2 second subframes in an MCOT in which the second moment falls, wherein N2 is an integer greater than or equal to 0.

5. The method according to claim 1, wherein the second moment is a start moment of one of at least one orthogonal frequency division multiplexing, OFDM, symbol set between the first moment and the third moment.

6. A data receiving method on an unlicensed spectrum, wherein the method comprises:
Detecting (S61), by a receive end by using a configuration of at least one of at least two types of pre-configured subframes at a transmission start moment in one or more reference subframes on an unlicensed spectrum, data sent by a transmit end at a second moment; and
Receiving (S62), by the receive end based on a detection result, the data sent by the transmit end, wherein
a length of the reference subframe is the same as a length of one of the at least two types of pre-configured subframes, and adjacent reference subframes are consecutive in terms of time,
wherein lengths of the at least two types of subframes each are 2^{K} times a length of a first subframe, K is an integer greater than or equal to 0, the second moment is a moment that is ΔT later than the start moment of a reference subframe in which the first moment falls, ΔT is an integer multiple of the length of the first subframe, and the first subframe is a subframe with a minimum length in the at least two types of subframes.

7. The method according to claim 6, wherein an interval length between two adjacent transmission start moments is a total length of a specified quantity of orthogonal frequency division multiplexing, OFDM, symbols; or
an interval length between two adjacent transmission start moments is the same as a length of a first subframe, and the first subframe is a subframe with a minimum length in the at least two types of subframes; or
an interval length between two adjacent transmission start moments is the same as a length of a second subframe, and the second subframe is a subframe with a maximum length in the at least two types of subframes.

8. A transmit end device, wherein the device comprises:
a channel monitoring module (121), configured to perform a listen before talk, LBT, operation on an unlicensed spectrum; and
a sending module (122), configured to: if the channel monitoring module determines at a first moment that the unlicensed spectrum is idle and available, send data to a receive end at a second moment by using the unlicensed spectrum, wherein the second moment is greater than or equal to the first moment and is less than or equal to a third moment, the third moment is a start moment of a reference subframe after the first moment, a length of the reference subframe is the same as a length of one of at least two types of pre-configured subframes, and adjacent reference subframes are consecutive in terms of time, ,
wherein lengths of the at least two types of subframes each are 2^{K} times a length of a first subframe, K is an integer greater than or equal to 0, the second moment is a moment that is ΔT later than a start moment of a reference subframe in which the first moment falls, ΔT is an integer multiple of the length of the first subframe, and the first subframe is a subframe with a minimum length in the at least two types of subframes.

9. The device according to claim 8, wherein
a configuration of a first subframe used to transmit the data in a maximum channel occupancy time, MCOT, in which the second moment falls is the same as a configuration of the first subframe, and the first subframe is the subframe with the minimum length in the at least two types of subframes; or
a configuration of a first subframe used to transmit the data in an MCOT is the same as a configuration of a subframe with a maximum length that can be accommodated between the second moment and a start moment of a next reference subframe; or
a configuration of a first subframe used to transmit the data in an MCOT is the same as a configuration of a subframe used by the device on a licensed spectrum at the second moment; or
a configuration of a subframe combination used to transmit the data in a first reference subframe length in an MCOT is the same as a configuration of a subframe combination used by the device on a licensed spectrum at the second moment; or
a configuration of a subframe combination used to transmit the data between the second moment and the third moment in an MCOT is the same as a configuration of a subframe combination used by the device on a licensed spectrum at the second moment.

10. The device according to claim 8 or 9, wherein before sending the data to the receive end at the second moment by using the unlicensed spectrum, the sending module (122) is further configured to:
send first indication information to the receive end, wherein the first indication information carries at least one piece of information of: configuration information of a first subframe used to transmit the data, configuration information of a subframe combination used to transmit the data in a first reference subframe length, configuration information of a first subframe used to transmit the data in a reference subframe length, and configuration information of a subframe combination used to transmit the data in a reference subframe length.

11. The device according to claim 8 or 9, wherein the sending module is specifically configured to:
send the data to the receive end by using M consecutive second subframes and N1 other subframes in the at least two types of subframes other than the second subframes in an MCOT in which the second moment falls, wherein the second subframe is a subframe with a maximum length in the at least two types of subframes, and N1 is an integer greater than or equal to 0; and/or
send the data to the receive end by using M consecutive second subframes and some of N2 second subframes in an MCOT in which the second moment falls, wherein N2 is an integer greater than or equal to 0.

12. The device according to claim 8, wherein the second moment is a start moment of one of at least one orthogonal frequency division multiplexing, OFDM, symbol set between the first moment and the third moment.

13. A receive end device, wherein the device comprises:
a detection module (141), configured to detect, by using a configuration of at least one of at least two types of pre-configured subframes at a transmission start moment in one or more reference subframes on an unlicensed spectrum, data sent by a transmit end at a second moment; and
a processing module (142), configured to receive, based on a detection result of the detection module, the data sent by the transmit end, wherein
a length of the reference subframe is the same as a length of one of the at least two types of pre-configured subframes, and adjacent reference subframes are consecutive in terms of time,
wherein lengths of the at least two types of subframes each are 2^{K} times a length of a first subframe, K is an integer greater than or equal to 0, the second moment is a moment that is ΔT later than the start moment of a reference subframe in which the first moment falls, ΔT is an integer multiple of the length of the first subframe, and the first subframe is a subframe with a minimum length in the at least two types of subframes.

## Patentansprüche

1. Datensendeverfahren in einem lizenzfreien Spektrum, wobei das Verfahren Folgendes umfasst:
Durchführen (S51), durch ein Sendeende, einer Erst-Zuhören-dann-Sprechen-Operation bzw. LBT-Operation auf einem lizenzfreien Spektrum; und
falls zu einem ersten Zeitpunkt bestimmt wird (S52), dass das lizenzfreie Spektrum brachliegt und verfügbar ist, Senden, durch das Sendeende, von Daten an ein Empfangsende zu einem zweiten Zeitpunkt unter Verwendung des lizenzfreien Spektrums, wobei der zweite Zeitpunkt größer oder gleich dem ersten Zeitpunkt und kleiner oder gleich einem dritten Zeitpunkt ist, wobei der dritte Zeitpunkt ein Startzeitpunkt eines Referenzunterrahmens nach dem ersten Zeitpunkt ist, eine Länge des Referenzunterrahmens dieselbe wie eine Länge von einer von mindestens zwei Arten von vorkonfigurierten Unterrahmen ist und angrenzende Referenzunterrahmen zeitlich aufeinanderfolgen,
wobei Längen der mindestens zwei Arten von Unterrahmen jeweils 2^{K}-mal einer Länge eines ersten Unterrahmens sind, K eine ganze Zahl größer oder gleich 0 ist, der zweite Zeitpunkt ein Zeitpunkt ist, der ΔT später als ein Startzeitpunkt eines Referenzunterrahmens, in welchen der erste Zeitpunkt fällt, liegt, ΔT ein ganzzahliges Vielfaches der Länge des ersten Unterrahmens ist und der erste Unterrahmen ein Unterrahmen mit einer minimalen Länge in den mindestens zwei Arten von Unterrahmen ist.

2. Verfahren nach Anspruch 1 oder 2, wobei
eine Konfiguration eines ersten Unterrahmens, der zum Übertragen der Daten in einer Maximalkanalbelegungszeit bzw. MCOT, in die der zweite Zeitpunkt fällt, verwendet wird, dieselbe wie eine Konfiguration des ersten Unterrahmens ist und der erste Unterrahmen ein Unterrahmen mit der minimalen Länge in den mindestens zwei Arten von Unterrahmen ist; oder
eine Konfiguration eines ersten Unterrahmens, der zum Übertragen der Daten in einer MCOT verwendet wird, dieselbe wie eine Konfiguration eines Unterrahmens mit einer maximalen Länge ist, die zwischen dem zweiten Zeitpunkt und einem Startzeitpunkt eines nächsten Referenzunterrahmens untergebracht werden kann; oder
eine Konfiguration eines ersten Unterrahmens, der zum Übertragen der Daten in einer MCOT verwendet wird, dieselbe wie eine Konfiguration eines Unterrahmens ist, der durch das Sendeende auf einem Lizenzspektrum zu dem zweiten Zeitpunkt verwendet wird; oder
eine Konfiguration einer Unterrahmenkombination, die zum Übertragen der Daten in einer ersten Referenzunterrahmenlänge in einer MCOT verwendet wird, dieselbe wie eine Konfiguration einer Unterrahmenkombination ist, die durch das Sendeende auf einem Lizenzspektrum zu dem zweiten Zeitpunkt verwendet wird; oder
eine Konfiguration einer Unterrahmenkombination, die zum Übertragen der Daten zwischen dem zweiten Zeitpunkt und dem dritten Zeitpunkt in einer MCOT verwendet wird, dieselbe wie eine Konfiguration einer Unterrahmenkombination ist, die durch das Sendeende auf einem Lizenzspektrum zu dem zweiten Zeitpunkt verwendet wird.

3. Verfahren nach Anspruch 1, wobei das Verfahren, vor dem Senden, durch das Sendeende, von Daten an ein Empfangsende zu einem zweiten Zeitpunkt unter Verwendung des lizenzfreien Spektrums, ferner Folgendes umfasst:
Senden, durch das Sendeende, von ersten Anzeigeinformationen an das Empfangsende, wobei die ersten Anzeigeinformationen mindestens ein Stück der folgenden Informationen führen: Konfigurationsinformationen eines zum Übertragen von Daten verwendeten ersten Unterrahmens und/oder Konfigurationsinformationen einer zum Übertragen der Daten in einer ersten Referenzunterrahmenlänge verwendeten Unterrahmenkombination und/oder Konfigurationsinformationen eines zum Übertragen der Daten in einer Referenzunterrahmenlänge verwendeten ersten Unterrahmens und/oder Konfigurationsinformationen einer zum Übertragen der Daten in einer Referenzunterrahmenlänge verwendeten Unterrahmenkombination.

4. Verfahren nach Anspruch 1, wobei das Senden, durch das Sendeende, von Daten an ein Empfangsende zu einem zweiten Zeitpunkt unter Verwendung des lizenzfreien Spektrums Folgendes umfasst:
Senden, durch das Sendeende, der Daten an das Empfangsende unter Verwendung von M aufeinanderfolgenden zweiten Unterrahmen und N1 anderen Unterrahmen in den mindestens zwei anderen Arten von Unterrahmen als den zweiten Unterrahmen in einer MCOT, in welche der zweite Zeitpunkt fällt, wobei der zweite Unterrahmen ein Unterrahmen mit einer maximalen Länge in den mindestens zwei Arten von Unterrahmen ist und N1 eine ganze Zahl größer oder gleich 0 ist; und/oder Senden, durch das Sendeende, der Daten an das Empfangsende unter Verwendung von M aufeinanderfolgenden zweiten Unterrahmen und einigen von N2 zweiten Unterrahmen in einer MCOT, in welche der zweite Zeitpunkt fällt, wobei N2 eine ganze Zahl größer oder gleich 0 ist.

5. Verfahren nach Anspruch 1, wobei der zweite Zeitpunkt ein Startzeitpunkt von einem aus mindestens einem Orthogonal-Frequenz-Multiplexing-Symbolsatz bzw. OFDM-Symbolsatz zwischen dem ersten Zeitpunkt und dem dritten Zeitpunkt ist.

6. Datenempfangsverfahren in einem lizenzfreien Spektrum, wobei das Verfahren Folgendes umfasst:
Detektieren (S61), durch ein Empfangsende unter Verwendung einer Konfiguration von mindesten einer von mindestens zwei Arten von vorkonfigurierten Unterrahmen zu einem Sendungsstartzeitpunkt in einem oder mehreren Referenzunterrahmen in einem lizenzfreien Spektrum, von Daten, die durch ein Sendeende zu einem zweiten Zeitpunkt gesendet wurden; und
Empfangen (S62), durch das Empfangsende, auf der Grundlage eines Detektionsergebnisses, der durch das Sendeende gesendeten Daten, wobei eine Länge des Referenzunterrahmens dieselbe wie eine Länge von einer der mindestens zwei Arten von vorkonfigurierten Unterrahmen ist und angrenzende Unterrahmen zeitlich aufeinanderfolgen,
wobei Längen der mindestens zwei Arten von Unterrahmen jeweils 2^{K}-mal eine Länge eines ersten Unterrahmens sind, K eine ganze Zahl größer oder gleich 0 ist, der zweite Zeitpunkt ein Zeitpunkt ist, der ΔT später als der Startzeitpunkt eines Referenzunterrahmens, in welchen der erste Zeitpunkt fällt, liegt, ΔT ein ganzzahliges Vielfaches der Länge des ersten Unterrahmens ist und der erste Unterrahmen ein Unterrahmen mit einer minimalen Länge in den mindestens zwei Arten von Unterrahmen ist.

7. Verfahren nach Anspruch 6, wobei eine Intervalllänge zwischen zwei angrenzenden Sendungsstartzeitpunkten eine Gesamtlänge einer spezifizierten Anzahl von Orthogonal-Frequenz-Multiplexing-Symbolen bzw. OFDM-Symbolen ist; oder
eine Intervalllänge zwischen zwei angrenzenden Sendungsstartzeitpunkten dieselbe wie eine Länge eines ersten Unterrahmens ist, und der erste Unterrahmen ein Unterrahmen mit einer minimalen Länge in den mindestens zwei Arten von Unterrahmen ist; oder
eine Intervalllänge zwischen zwei angrenzenden Sendungsstartzeitpunkten dieselbe wie eine Länge eines zweiten Unterrahmens ist, und der zweite Unterrahmen ein Unterrahmen mit einer maximalen Länge in den mindestens zwei Arten von Unterrahmen ist.

8. Sendeendevorrichtung, wobei die Vorrichtung Folgendes umfasst:
ein Kanalüberwachungsmodul (121), das ausgelegt ist zum Durchführen einer Erst-Zuhören-dann-Sprechen-Operation bzw. LBT-Operation auf einem lizenzfreien Spektrum; und
ein Sendemodul (122), das ausgelegt ist zum: falls das Kanalüberwachungsmodul zu einem ersten Zeitpunkt bestimmt, dass das lizenzfreie Spektrum brachliegt und verfügbar ist, Senden von Daten an ein Empfangsende zu einem zweiten Zeitpunkt unter Verwendung des lizenzfreien Spektrums, wobei der zweite Zeitpunkt größer oder gleich dem ersten Zeitpunkt und kleiner oder gleich einem dritten Zeitpunkt ist, wobei der dritte Zeitpunkt ein Startzeitpunkt eines Referenzunterrahmens nach dem ersten Zeitpunkt ist, eine Länge des Referenzunterrahmens dieselbe wie eine Länge von einer von mindestens zwei Arten von vorkonfigurierten Unterrahmen ist und angrenzende Referenzunterrahmen zeitlich aufeinanderfolgen,
wobei Längen der mindestens zwei Arten von Unterrahmen jeweils 2^{K}-mal einer Länge eines ersten Unterrahmens sind, K eine ganze Zahl größer oder gleich 0 ist, der zweite Zeitpunkt ein Zeitpunkt ist, der ΔT später als ein Startzeitpunkt eines Referenzunterrahmens, in welchen der erste Zeitpunkt fällt, liegt, ΔT ein ganzzahliges Vielfaches der Länge des ersten Unterrahmens ist und der erste Unterrahmen ein Unterrahmen mit einer minimalen Länge in den mindestens zwei Arten von Unterrahmen ist.

9. Vorrichtung nach Anspruch 8, wobei
eine Konfiguration eines ersten Unterrahmens, der zum Übertragen der Daten in einer Maximalkanalbelegungszeit bzw. MCOT, in die der zweite Zeitpunkt fällt, verwendet wird, dieselbe wie eine Konfiguration des ersten Unterrahmens ist und der erste Unterrahmen der Unterrahmen mit der minimalen Länge in den mindestens zwei Arten von Unterrahmen ist; oder
eine Konfiguration eines ersten Unterrahmens, der zum Übertragen der Daten in einer MCOT verwendet wird, dieselbe wie eine Konfiguration eines Unterrahmens mit einer maximalen Länge ist, die zwischen dem zweiten Zeitpunkt und einem Startzeitpunkt eines nächsten Referenzunterrahmens untergebracht werden kann; oder
eine Konfiguration eines ersten Unterrahmens, der zum Übertragen der Daten in einer MCOT verwendet wird, dieselbe wie eine Konfiguration eines Unterrahmens ist, der durch die Vorrichtung auf einem Lizenzspektrum zu dem zweiten Zeitpunkt verwendet wird; oder
eine Konfiguration einer Unterrahmenkombination, die zum Übertragen der Daten in einer ersten Referenzunterrahmenlänge in einer MCOT verwendet wird, dieselbe wie eine Konfiguration einer Unterrahmenkombination ist, die durch die Vorrichtung auf einem Lizenzspektrum zu dem zweiten Zeitpunkt verwendet wird; oder
eine Konfiguration einer Unterrahmenkombination, die zum Übertragen der Daten zwischen dem zweiten Zeitpunkt und dem dritten Zeitpunkt in einer MCOT verwendet wird, dieselbe wie eine Konfiguration einer Unterrahmenkombination ist, die durch die Vorrichtung auf einem Lizenzspektrum zu dem zweiten Zeitpunkt verwendet wird.

10. Vorrichtung nach Anspruch 8 oder 9, wobei vor dem Senden der Daten an das Empfangsende zu dem zweiten Zeitpunkt unter Verwendung des lizenzfreien Spektrums das Sendemodul (122) ferner ausgelegt ist zum:
Senden von ersten Anzeigeinformationen an das Empfangsende, wobei die ersten Anzeigeinformationen mindestens ein Stück der folgenden Informationen führen: Konfigurationsinformationen eines zum Übertragen der Daten verwendeten ersten Unterrahmens und/oder Konfigurationsinformationen einer zum Übertragen der Daten in einer ersten Referenzunterrahmenlänge verwendeten Unterrahmenkombination und/oder Konfigurationsinformationen eines zum Übertragen der Daten in einer Referenzunterrahmenlänge verwendeten ersten Unterrahmens und/oder Konfigurationsinformationen einer zum Übertragen der Daten in einer Referenzunterrahmenlänge verwendeten Unterrahmenkombination.

11. Verfahren nach Anspruch 8 oder 9, wobei das Sendemodul insbesondere ausgelegt ist zum:
Senden der Daten an das Empfangsende unter Verwendung von M aufeinanderfolgenden zweiten Unterrahmen und N1 anderen Unterrahmen in den mindestens zwei anderen Arten von Unterrahmen als den zweiten Unterrahmen in einer MCOT, in welche der zweite Zeitpunkt fällt, wobei der zweite Unterrahmen ein Unterrahmen mit einer maximalen Länge in den mindestens zwei Arten von Unterrahmen ist und N1 eine ganze Zahl größer oder gleich 0 ist; und/oder Senden der Daten an das Empfangsende unter Verwendung von M aufeinanderfolgenden zweiten Unterrahmen und einigen von N2 zweiten Unterrahmen in einer MCOT, in welche der zweite Zeitpunkt fällt, wobei N2 eine ganze Zahl größer oder gleich 0 ist.

12. Vorrichtung nach Anspruch 8, wobei der zweite Zeitpunkt ein Startzeitpunkt von einem aus mindestens einem Orthogonal-Frequenz-Multiplexing-Symbolsatz bzw. OFDM-Symbolsatz zwischen dem ersten Zeitpunkt und dem dritten Zeitpunkt ist.

13. Empfangsendevorrichtung, wobei die Vorrichtung Folgendes umfasst:
ein Detektionsmodul (141), das ausgelegt ist zum Detektieren, unter Verwendung einer Konfiguration von mindestens einer von mindestens zwei Arten von vorkonfigurierten Unterrahmen zu einem Sendungsstartzeitpunkt in einem oder mehreren Referenzunterrahmen in einem lizenzfreien Spektrum, von Daten, die durch ein Sendeende zu einem zweiten Zeitpunkt gesendet wurden; und
ein Verarbeitungsmodul (142), das ausgelegt ist zum Empfangen auf der Grundlage eines Detektionsergebnisses des Detektionsmoduls, der durch das Sendeende gesendeten Daten, wobei
eine Länge des Referenzunterrahmens dieselbe wie eine Länge von einer der mindestens zwei Arten von vorkonfigurierten Unterrahmen ist und angrenzende Referenzunterrahmen zeitlich aufeinanderfolgen,
wobei Längen der mindestens zwei Arten von Unterrahmen jeweils 2^{K}-mal eine Länge eines ersten Unterrahmens sind, K eine ganze Zahl größer oder gleich 0 ist, der zweite Zeitpunkt ein Zeitpunkt ist, der ΔT später als der Startzeitpunkt eines Referenzunterrahmens, in welchen der erste Zeitpunkt fällt, liegt, ΔT ein ganzzahliges Vielfaches der Länge des ersten Unterrahmens ist und der erste Unterrahmen ein Unterrahmen mit einer minimalen Länge in den mindestens zwei Arten von Unterrahmen ist.

## Revendications

1. Procédé d'envoi de données sur un spectre sans licence, où le procédé comprend les étapes suivantes :
exécuter (S51), par une extrémité de transmission, une opération d'écoute avant d'émettre, LBT, sur un spectre sans licence ; et
s'il est déterminé (S52) à un premier moment que le spectre sans licence est inutilisé et disponible, envoyer, par l'extrémité de transmission, des données à une extrémité de réception à un deuxième moment en utilisant le spectre sans licence, où le deuxième moment est postérieur ou identique au premier moment et est antérieur ou identique à un troisième moment, le troisième moment est un moment de début d'une sous-trame de référence après le premier moment, la longueur de la sous-trame de référence est la même que la longueur d'une sous-trame d'au moins deux types de sous-trames préconfigurées, et les sous-trames de référence adjacentes sont consécutives dans le temps,
où les longueurs des au moins deux types de sous-trames ont chacune 2^{K} fois la longueur d'une première sous-trame, K est un entier supérieur ou égal à 0, le deuxième moment est un moment qui est ΔT plus tard qu'un moment de début d'une sous-trame de référence dans laquelle le premier moment tombe, ΔT est un multiple entier de la longueur de la première sous-trame, et la première sous-trame est la sous-trame ayant la longueur minimale dans les au moins deux types de sous-trames.

2. Procédé selon la revendication 1 ou la revendication 2, dans lequel :
une configuration d'une première sous-trame utilisée pour transmettre les données dans un temps d'occupation de canal maximal, MCOT, où le deuxième moment tombe est la même qu'une configuration de la première sous-trame, et la première sous-trame est la sous-trame ayant la longueur minimale dans les au moins deux types de sous-trames ; ou
une configuration d'une première sous-trame utilisée pour transmettre les données dans un MCOT est la même qu'une configuration d'une sous-trame ayant une longueur maximale pouvant être insérée entre le deuxième moment et un moment de début d'une sous-trame de référence suivante ; ou
une configuration d'une première sous-trame utilisée pour transmettre les données dans un MCOT est la même qu'une configuration d'une sous-trame utilisée par l'extrémité de transmission sur un spectre sous licence au deuxième moment ; ou
une configuration d'une combinaison de sous-trames utilisée pour transmettre les données dans une première longueur de sous-trame de référence dans un MCOT est la même qu'une configuration d'une combinaison de sous-trames utilisée par l'extrémité de transmission sur un spectre sous licence au deuxième moment ; ou
une configuration d'une combinaison de sous-trames utilisée pour transmettre les données entre le deuxième moment et le troisième moment dans un MCOT est la même qu'une configuration d'une combinaison de sous-trames utilisée par l'extrémité de transmission sur un spectre sous licence au deuxième moment.

3. Procédé selon la revendication 1, dans lequel avant l'envoi, par l'extrémité de transmission, de données à une extrémité de réception à un deuxième moment en utilisant le spectre sans licence, le procédé comprend en outre les étapes suivantes :
envoyer, par l'extrémité de transmission, des premières informations d'indication à l'extrémité de réception, où les premières informations d'indication acheminent au moins un élément d'informations parmi les suivants : des informations de configuration d'une première sous-trame utilisée pour transmettre les données, des informations de configuration d'une combinaison de sous-trames utilisée pour transmettre les données dans une première longueur de sous-trame de référence, des informations de configuration d'une première sous-trame utilisée pour transmettre les données dans une longueur de sous-trame de référence, et des informations de configuration d'une combinaison de sous-trames utilisée pour transmettre les données dans une longueur de sous-trame de référence.

4. Procédé selon la revendication 1, dans lequel l'envoi, par l'extrémité de transmission, de données à une extrémité de réception à un deuxième moment en utilisant le spectre sans licence comprend les étapes suivantes :
envoyer, par l'extrémité de transmission, les données à l'extrémité de réception en utilisant M deuxièmes sous-trames consécutives et N1 autres sous-trames dans les au moins deux types de sous-trames autres que les deuxièmes sous-trames dans un MCOT dans lequel tombe le deuxième moment, où la deuxième sous-trame est la sous-trame ayant la longueur maximale dans les au moins deux types de sous-trames, et N1 est un entier supérieur ou égal à 0 ; et/ou
envoyer, par l'extrémité de transmission, les données à l'extrémité de réception en utilisant M deuxièmes sous-trames consécutives et certaines des N2 deuxièmes sous-trames dans un MCOT dans lequel tombe le deuxième moment, où N2 est un nombre entier supérieur ou égal à 0.

5. Procédé selon la revendication 1, dans lequel le deuxième moment est un moment de début de l'un d'au moins un ensemble de symboles de multiplexage par répartition orthogonale de la fréquence, OFDM, entre le premier moment et le troisième moment.

6. Procédé de réception de données sur un spectre sans licence, dans lequel le procédé comprend les étapes suivantes :
détecter (S61), par une extrémité de réception en utilisant une configuration d'au moins une sous-trame d'au moins deux types de sous-trames préconfigurées à un moment de début de transmission dans une ou plusieurs sous-trames de référence sur un spectre sans licence, des données envoyées par une extrémité de transmission à un deuxième moment ; et
recevoir (S62), par l'extrémité de réception, sur la base d'un résultat de détection, les données envoyées par l'extrémité de transmission, où :
la longueur de la sous-trame de référence est la même que la longueur d'une sous-trame des au moins deux types de sous-trames préconfigurées, et les sous-trames de référence adjacentes sont consécutives dans le temps,
où les longueurs des au moins deux types de sous-trames ont chacune 2^{K} fois la longueur d'une première sous-trame, K est un entier supérieur ou égal à 0, le deuxième moment est un moment qui est ΔT plus tard que le moment de début d'une sous-trame de référence dans laquelle le premier moment tombe, ΔT est un multiple entier de la longueur de la première sous-trame, et la première sous-trame est la sous-trame ayant la longueur minimale dans les au moins deux types de sous-trames.

7. Procédé selon la revendication 6, dans lequel une longueur d'intervalle entre deux moments de début de transmission adjacents est une longueur totale d'une quantité spécifiée de symboles de multiplexage par répartition orthogonale de la fréquence, OFDM ; ou
la longueur d'intervalle entre deux moments adjacents de début de transmission est la même que la longueur d'une première sous-trame, et la première sous-trame est la sous-trame ayant la longueur minimale dans les au moins deux types de sous-trames ; ou
la longueur d'intervalle entre deux moments adjacents de début de transmission est la même que la longueur d'une deuxième sous-trame, et la deuxième sous-trame est la sous-trame ayant la longueur maximale dans les au moins deux types de sous-trames.

8. Dispositif d'extrémité de transmission, dans lequel le dispositif comprend :
un module de surveillance de canal (121), configuré pour exécuter une opération d'écoute avant d'émettre, LBT, sur un spectre sans licence ; et
un module d'envoi (122), configuré : si le module de surveillance de canal détermine à un premier moment que le spectre sans licence est inutilisé et disponible, pour envoyer des données à une extrémité de réception à un deuxième moment en utilisant le spectre sans licence, où le deuxième moment est postérieur ou identique au premier moment et est antérieur ou identique à un troisième moment, le troisième moment est un moment de début d'une sous-trame de référence après le premier moment, la longueur de la sous-trame de référence est la même que la longueur d'une sous-trame d'au moins deux types de sous-trames préconfigurées, et les sous-trames de référence adjacentes sont consécutives dans le temps,
où les longueurs des au moins deux types de sous-trames ont chacune 2^{K} fois la longueur d'une première sous-trame, K est un entier supérieur ou égal à 0, le deuxième moment est un moment qui est ΔT plus tard qu'un moment de début d'une sous-trame de référence dans laquelle le premier moment tombe, ΔT est un multiple entier de la longueur de la première sous-trame, et la première sous-trame est une sous-trame avec une longueur minimale dans les au moins deux types de sous-trames.

9. Dispositif selon la revendication 8, dans lequel :
une configuration d'une première sous-trame utilisée pour transmettre les données dans un temps d'occupation de canal maximal, MCOT, où le deuxième moment tombe est la même qu'une configuration de la première sous-trame, et la première sous-trame est la sous-trame ayant la longueur minimale dans les au moins deux types de sous-trames ; ou
une configuration d'une première sous-trame utilisée pour transmettre les données dans un MCOT est la même qu'une configuration d'une sous-trame ayant une longueur maximale pouvant être insérée entre le deuxième moment et un moment de début d'une sous-trame de référence suivante ; ou
une configuration d'une première sous-trame utilisée pour transmettre les données dans un MCOT est la même qu'une configuration d'une sous-trame utilisée par le dispositif sur un spectre sous licence au deuxième moment ; ou
une configuration d'une combinaison de sous-trames utilisée pour transmettre les données dans une première longueur de sous-trame de référence dans un MCOT est la même qu'une configuration d'une combinaison de sous-trames utilisée par le dispositif sur un spectre sous licence au deuxième moment ; ou
une configuration d'une combinaison de sous-trames utilisée pour transmettre les données entre le deuxième moment et le troisième moment dans un MCOT est la même qu'une configuration d'une combinaison de sous-trames utilisée par le dispositif sur un spectre sous licence au deuxième moment.

10. Dispositif selon la revendication 8 ou la revendication 9, dans lequel, avant d'envoyer les données à l'extrémité de réception au deuxième moment en utilisant le spectre sans licence, le module d'envoi (122) est en outre configuré pour :
envoyer des premières informations d'indication à l'extrémité de réception, où les premières informations d'indication acheminent au moins un élément d'informations parmi les suivants : des informations de configuration d'une première sous-trame utilisée pour transmettre les données, des informations de configuration d'une combinaison de sous-trames utilisée pour transmettre les données dans une première longueur de sous-trame de référence, des informations de configuration d'une première sous-trame utilisée pour transmettre les données dans une longueur de sous-trame de référence, et des informations de configuration d'une combinaison de sous-trames utilisée pour transmettre les données dans une longueur de sous-trame de référence.

11. Dispositif selon la revendication 8 ou la revendication 9, dans lequel le module d'envoi est spécifiquement configuré pour :
envoyer les données à l'extrémité de réception en utilisant M deuxièmes sous-trames consécutives et N1 autres sous-trames dans les au moins deux types de sous-trames autres que les deuxièmes sous-trames dans un MCOT dans lequel tombe le deuxième moment, où la deuxième sous-trame est la sous-trame ayant la longueur maximale dans les au moins deux types de sous-trames, et N1 est un entier supérieur ou égal à 0 ; et/ou
envoyer les données à l'extrémité de réception en utilisant M deuxièmes sous-trames consécutives et certaines des N2 deuxièmes sous-trames dans un MCOT dans lequel tombe le deuxième moment, où N2 est un nombre entier supérieur ou égal à 0.

12. Dispositif selon la revendication 8, dans lequel le deuxième moment est un moment de début de l'un d'au moins un ensemble de symboles de multiplexage par répartition orthogonale de la fréquence, OFDM, entre le premier moment et le troisième moment.

13. Dispositif d'extrémité de réception, où le dispositif comprend :
un module de détection (141), configuré pour détecter, en utilisant une configuration d'au moins une sous-trame d'au moins deux types de sous-trames préconfigurées à un moment de début de transmission dans une ou plusieurs sous-trames de référence sur un spectre sans licence, des données envoyées par une extrémité de transmission à un deuxième moment ; et
un module de traitement (142), configuré pour recevoir, sur la base d'un résultat de détection du module de détection, les données envoyées par l'extrémité de transmission, où :
la longueur de la sous-trame de référence est la même que la longueur d'une sous-trame des au moins deux types de sous-trames préconfigurées, et les sous-trames de référence adjacentes sont consécutives dans le temps,
où les longueurs des au moins deux types de sous-trames ont chacune 2^{K} fois la longueur d'une première sous-trame, K est un entier supérieur ou égal à 0, le deuxième moment est un moment qui est ΔT plus tard que le moment de début d'une sous-trame de référence dans laquelle le premier moment tombe, ΔT est un multiple entier de la longueur de la première sous-trame, et la première sous-trame est la sous-trame ayant la longueur minimale dans les au moins deux types de sous-trames.
